(19) Europäisches Patentamt
European Patent Office
Office européen des brevets

(11) **EP 4 446 774 A1**

(12) **EUROPEAN PATENT APPLICATION**

(43) Date of publication:
**16.10.2024 Bulletin 2024/42**

(21) Application number: **24168033.9**

(22) Date of filing: **02.04.2024**

(51) International Patent Classification (IPC):
**G01S 7/481** (2006.01)     **G01S 17/34** (2020.01)

(52) Cooperative Patent Classification (CPC):
**G01S 17/34; G01S 7/481; G01S 7/4811;
G01S 7/4814; G01S 7/4816; G01S 7/4817;
G01S 7/4818; G01S 7/491;** Y02A 90/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023 CN 202310370431**

(71) Applicant: **Suteng Innovation Technology Co., Ltd
Shenzhen City Guangdong 518000 (CN)**

(72) Inventors:
• **WANG, Jing
Shenzhen City (CN)**
• **WANG, Hao
Shenzhen City (CN)**
• **DONG, Penghui
Shenzhen City (CN)**
• **LIAO, Jiawen
Shenzhen City (CN)**

(74) Representative: **Ran, Handong et al
Maucher Jenkins
Seventh Floor Offices
Artillery House
11-19 Artillery Row
London SW1P 1RT (GB)**

(54) **LIDAR**

(57)     This application discloses an embodiment of a LiDAR. The LiDAR comprises a light source unit, a light amplification module, and a silicon photonic chip. The light source unit is used to generate a first light beam. The light amplification module is designed to receive the first light beam and amplify it. The silicon photonic chip is configured to receive the amplified first light beam through spatial optical coupling and includes a cladding, a transceiving waveguide module, and an photoelectric detection module. The transceiving waveguide module consists of an emitting waveguide unit and a receiving waveguide unit. The emitting waveguide unit receives a detection optical signal and emits it out of the silicon photonic chip to detect a target object, while the receiving waveguide unit captures an echo optical signal. The photoelectric detection module is responsible for receiving a local oscillator light signal and the echo optical signal.

Figure 1

EP 4 446 774 A1

**Description**

**CROSS REFERENCE TO RELATED APPLICATION**

The present application claims the benefit of priority to Chinese Patent Application No. 202310370431.6, filed on April 10, 2023.

**TECHNICAL FIELD**

This application relates to the field of laser detection technology, particularly to a LiDAR and a mobile device.

**BACKGROUND**

A LiDAR is a system that detects the position, velocity, and other characteristics of a target by emitting laser beams. The LiDAR emits detection light towards a target, receives the echo light reflected back from the target, compares the echo light with a local oscillator light, and obtains information about the target, such as distance, azimuth, height, speed, attitude, and even shape parameters.

Frequency Modulated Continuous Wave (FMCW) LiDAR combines frequency-modulated continuous wave ranging with laser detection technology, offering advantages such as a large range of measurement, high distance resolution, and the ability to perform Doppler velocity measurements. FMCW LiDAR includes a light source module, a fiber optic transmission module, a light amplification module, a beam splitting module, a scanning module, and a silicon photonic chip. The light source module generates detection light signals and local oscillator light signals. The detection light signal passes through the fiber optic transmission module, the light amplification module, the beam splitting module, and the scanning module before being emitted outside the LiDAR to detect target objects. The local oscillator signal enters the silicon photonic chip. The echo light signal reflected by the target object passes through the scanning module and the beam splitting module before entering the silicon photonic chip. The beam splitting module can be devices such as an optical circulator and a polarizing beam splitter, which separate the detection light signal from the echo light signal to prevent the echo light signal from re-entering the fiber optic transmission module.

In some solutions, FMCW LiDAR systems use fiber optics to transmit detection light signals and silicon photonic chips to receive echo light signals, resulting in relatively low overall integration of the LiDAR systems.

**SUMMARY**

This application provides a LiDAR and a mobile device to improve the current low integration level of LiDAR.

In an embodiment, the LiDAR includes a light source module, a light amplification module, and a silicon photonic chip. The light source module is used to generate a first light beam. The light amplification module receives the first light beam, amplifies the first light beam, and output an amplified first light beam. The silicon photonic chip is configured to receive the amplified first light beam through spatial optical coupling. The silicon photonic chip includes a cladding, a transceiving waveguide module, and an photoelectric detection module. The transceiving waveguide module is embedded in the cladding and includes an emitting waveguide module and a receiving waveguide module. The emitting waveguide module receives a detection optical signal and emits the detection optical signal out of the silicon photonic chip to detect a target object. The detection optical signal is at least a part of the first light beam. The receiving waveguide module receives an echo optical signal formed by the target object reflecting the detection optical signal. The photoelectric detection module receives a local oscillator light signal and the echo optical signal output by the receiving waveguide module.

In an embodiment

In an embodiment, the mobile device includes the LiDAR as described above. The LiDAR includes the light source module, light amplification module, and silicon photonic chip. The silicon photonic chip comprises a cladding, transceiving waveguide module, and photoelectric detection module. The transceiving waveguide module is embedded in the cladding, and the transceiving waveguide module includes an emitting waveguide module and a receiving waveguide module. The emitting waveguide module is used to receive the detection optical signal and emit it out of the silicon photonic chip to detect a target object. The receiving waveguide module is used to receive the echo optical signal. The LiDAR provided in embodiments of this application achieves higher integration.

In an embodiment, the light amplification module is positioned upstream of the silicon photonic chip. In an embodiment, the light amplification module is positioned downstream of the emitting waveguide module. A higher power of the first light beam emitted to the scanning module is provided. In some embodiments, a larger detection blind zone due to the larger volume of the light amplification module obstructing close-range echo signals. By using spatial optical coupling to couple the first light beam into the silicon photonic chip, where the emitting waveguide module is made of silicon nitride waveguide, the LiDAR can achieve easier assembly of the light amplification module between the light source unit and the silicon photonic chip, reduce blind zones in close-range detection, and ensure high power emission of the first light beam without affecting the reception of echo signals.

**BRIEF DESCRIPTION OF DRAWINGS**

To provide a clearer explanation of the technical solutions in the embodiments described in this application, a brief introduction to the drawings required in the embodiments descriptions will be presented below.

Figure 1 is a schematic diagram of a mobile device provided in an embodiment;
Figure 2 is a schematic diagram of a LiDAR provided in an embodiment;
Figure 3 is a schematic diagram of a LiDAR provided in an embodiment;
Figure 4 is a schematic diagram of a planar lightwave circuit provided in an embodiment;
Figure 5 is a schematic diagram of a LiDAR provided in an embodiment;
Figure 6 is a perspective structural schematic diagram of a silicon photonic chip provided in an embodiment;
Figure 7 is a schematic diagram of a first structure of a transceiving waveguide module in a silicon photonic chip provided in an embodiment;
Figure 8 is a schematic diagram of a second structure of a transceiving waveguide module in a silicon photonic chip provided in an embodiment;
Figure 9 is a schematic diagram of a third structure of a transceiving waveguide module in a silicon photonic chip provided in an embodiment;
Figure 10 is a schematic diagram of a fourth structure of a transceiving waveguide module in a silicon photonic chip provided in an embodiment;
Figure 11 is a schematic diagram of a fifth structure of a transceiving waveguide module in a silicon photonic chip provided in an embodiment;
Figure 12 is a schematic diagram of a sixth structure of a transceiving waveguide module in a silicon photonic chip provided in an embodiment;
Figure 13 is a schematic diagram of a seventh structure of a transceiving waveguide module in a silicon photonic chip provided in an embodiment;
Figure 14 is a schematic diagram of an eighth structure of a transceiving waveguide module in a silicon photonic chip provided in an embodiment;
Figure 15 is a schematic diagram of a ninth structure of a transceiving waveguide module in a silicon photonic chip provided in an embodiment;
Figure 16 is a schematic diagram of a tenth structure of a transceiving waveguide module in a silicon photonic chip provided in an embodiment;
Figure 17 is a schematic diagram of an eleventh structure of a transceiving waveguide module in a silicon photonic chip provided in an embodiment;
Figure 18 is a schematic diagram of a twelfth structure of a transceiving waveguide module in a silicon photonic chip provided in an embodiment;
Figure 19 is a schematic diagram of a thirteenth structure of a transceiving waveguide module in a silicon photonic chip provided in an embodiment;
Figure 20 is a schematic diagram of a fourteenth structure of a transceiving waveguide module in a silicon photonic chip provided in an embodiment;
Figure 21 is a schematic diagram of a fifteenth structure of a transceiving waveguide module in a silicon photonic chip provided in an embodiment;
Figure 22 is a curve schematic diagram of the optical power of the echo light output to the back end of the receiving waveguide module in the silicon photonic chip when detecting target objects in the range of 0-250m in the silicon photonic chip shown in Figure 21;
Figure 23 is a curve schematic diagram of the optical power of the echo light output to the back end of the receiving waveguide module in the silicon photonic chip when detecting target objects in the range of 0-250m without setting the second coupling region in the silicon photonic chip shown in Figure 21;
Figure 24 is a schematic diagram of a sixteenth structure of a transceiving waveguide module in a silicon photonic chip provided in an embodiment;
Figure 25 is a structural schematic diagram of the input receiving waveguide of the receiving waveguide module in a silicon photonic chip and the beam combiner;
Figure 26 is a schematic diagram of a seventeenth structure of a transceiving waveguide module in a silicon photonic chip provided in an embodiment;

Figure 27 is a schematic diagram of an eighteenth structure of a transceiving waveguide module in a silicon photonic chip provided in an embodiment;

Figure 28 is a structural schematic diagram of the emitting waveguide module in the silicon photonic chip shown in Figure 27;

Figure 29 is a grayscale diagram of the light field propagation schematic diagram when the emitting waveguide module is used to transmit detection light in the silicon photonic chip shown in Figure 28;

Figure 30 is a grayscale diagram of the mode evolution schematic diagram when the emitting waveguide module is used to transmit detection light in the silicon photonic chip shown in Figure 29;

Figure 31 is a schematic diagram of light beam transmission with a single emitting waveguide in single-input single-output;

Figure 32 is a schematic diagram of light beam transmission with the emitting waveguide module in multi-output single-input in an embodiment;

Figure 33 is a grayscale diagram of the far-field light spot where the emitted light beam corresponding to the single emitting waveguide in related technology falls on the target object shown in Figure 31;

Figure 34 is a grayscale diagram of the far-field light spot where the emitted light beam corresponding to the emitting waveguide module in the embodiment falls on the target object shown in Figure 32;

Figure 35 is a perspective structural schematic diagram of the emitting waveguide module in a silicon photonic chip provided in an embodiment;

Figure 36 is a structural schematic diagram of the emitting waveguide module in the silicon photonic chip shown in Figure 35;

Figure 37 is a schematic diagram of a mobile device provided in one embodiment.

Drawing reference explanation:

1, LiDAR;

100, light source module; 110, light source unit; 120, first light beam splitting module; 130, second light beam splitting module; 111, laser; 112, collimating lens; 113, isolator; 121, beam splitter; 122, planar light wave circuit; 123, first focusing lens; 1221, third beam splitter; 1222, second mode converter; 1223, third mode converter;

200, light amplification module; 210, first lens module; 220, second lens module;

300, silicon photonic chip; 310, cladding; 320, transceiving waveguide module; 330, photoelectric detection module; 340, first beam splitting module; 350, nonlinear calibration module; 360, second beam splitting module; 321, emitting waveguide module; 322, receiving waveguide module; 331, photoelectric detection unit; 341, first beam splitter; 342, first mode converter; 361, fourth beam splitter; 362, fifth beam splitter; 363, second focusing lens; 364, fourth mode converter;

3211, first coupling region; 3212, first emitting waveguide; 3212m, incident end; 3212n, emitting end; 32121, first input part; 32121p, first portion; 32121q, second portion; 32122, first coupling part; 32123, first output part; 32124, first transmission part; 32125, third coupling part; 3213, second emitting waveguide; 32131, second coupling part; 32132, second output part; 32133, second transmission part; 32134, fourth coupling part; 3221, second coupling region; 32211, first subpart; 32212, second subpart; 32213, third subpart; 3222, receiving waveguide; 32221, first end; 32222, second end; 32223, first receiving waveguide; 32224, second receiving waveguide; 32227, first connection part; 32228, third end; 32229, second connection part; 32220, fourth end; 3223, beam combiner; 32231, first beam combiner; 32232, second beam combiner; 32233, third beam combiner; 3224, first transmission waveguide; 3225, phase compensator; c, first interface; d, second interface; e, third interface; f, fourth interface; s, fifth interface; t, sixth interface; 6, scanner; 71, first coupler; 72, second coupler; 73, splitter; 74, mixer; 75, balanced photodetector; x, first direction; y, second direction; z, thickness direction; 3212', first emitting waveguide; 400, reflection module; 500, scanning module; 1b, LiDAR; 1c, LiDAR; 2, mobile device.

## DETAILED DESCRIPTION

When referring to the accompanying drawings, unless otherwise indicated, the same reference numerals in different drawings represent the same or similar elements. The exemplary embodiments described below do not represent all embodiments consistent with the present application. Instead, they are examples of devices and methods that are in accordance with some aspects of the present application as detailed in the appended claims.

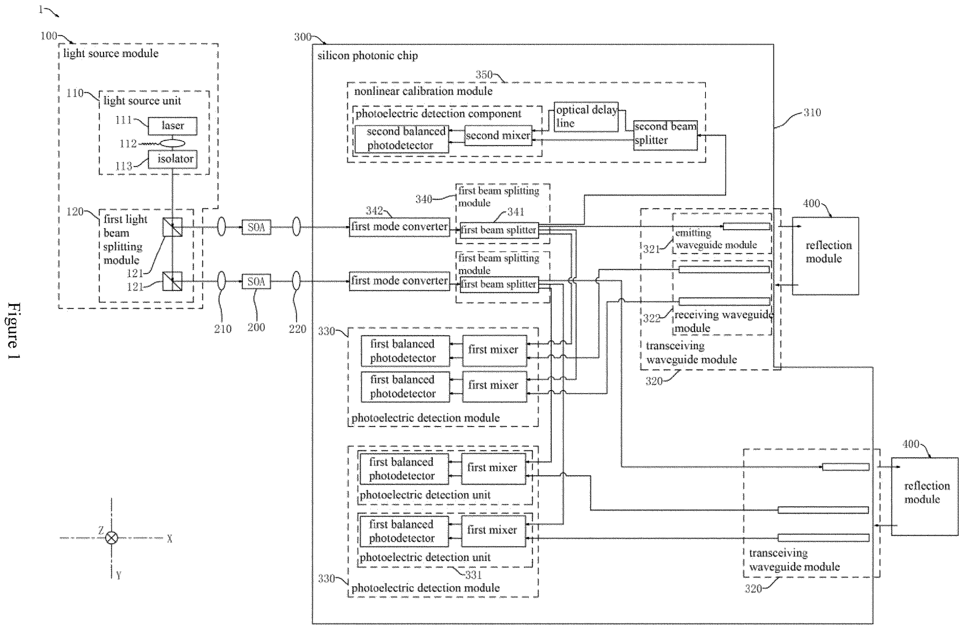

Please refer to Figure 1, which illustrates a schematic diagram of a LiDAR 1 provided in an embodiment of the present application. The LiDAR includes a light source module 100, a light amplification module 200, and a silicon photonic chip 300. The light source module 100 is used to generate a first light beam. The light amplification module 200 is configured to receive the first light beam and amplify it, to output an amplified first light beam. The silicon photonic chip 300 is configured to receive the amplified first light beam through spatial optical coupling. The silicon photonic chip 300 comprises a cladding 310, a transceiving waveguide module 320, and an photoelectric detection module 330. The transceiving waveguide module 320 is embedded in the cladding 310 and includes an emitting waveguide module 321 and a receiving waveguide module 322. The emitting waveguide module 321 receives a detection optical signal and emits it out of the silicon photonic chip to detect a target object; the detection optical signal is at least a part of the first light beam. The receiving waveguide module 322 is configured to receive an echo optical signal, which is formed by the target object reflecting the detection optical signal. The photoelectric detection module 330 receives a local oscillator light signal and the echo optical signal output by the receiving waveguide module, generates beat frequency signals from them, and converts them into corresponding electrical signals. The local oscillator light signal and the detection optical signal have the same temporal and frequency characteristics, which can be directly generated by the light source module 100 or indirectly generated, for example, through splitting of the first light beam.

Next, taking the example of a LiDAR comprising two or more light amplification modules 200 and two or more transceiving waveguide modules 320, the structure of the LiDAR is explained with the case of the light source module 100 having the first light beam splitting module 120 for spectral splitting. The arrangement of multiple transceiving waveguide modules 320 is advantageous for increasing the quantity of lines during LiDAR detection, thereby enhancing the LiDAR's resolution. In some embodiments, the LiDAR may include three or more light amplification modules 200 and three or more transceiving waveguide modules 320, with the setup being essentially the same. In an embodiment, the LiDAR may include one light amplification module 200 and one transceiving waveguide module 320, in which case the light source module 100 does not need to have the aforementioned first light beam splitting module 120.

For the light source module 100 mentioned above, please refer to Figure 1, which is used to generate a first light beam so that the LiDAR can detect a target object using at least a portion of this first light beam, namely the detection optical signal. In an embodiment, the light source module 100 includes a light source unit 110 and a first light beam splitting module 120. The light source unit 110 is used to generate a source light signal. In some embodiments, the light source unit 110 includes a laser 111, a collimating lens 112, and an isolator 113. The laser 111 is used to generate the aforementioned source light signal, which is a frequency-modulated continuous wave (FMCW) signal, meaning that the LiDAR is an FMCW LiDAR; the waveform of the source light signal can be a triangular wave or a sawtooth wave. The collimating lens 112 is used to collimate the source light signal. The isolator 113 is used to receive the collimated source light signal from the collimating lens 112 and output it downstream; the setting of the isolator 113 enables unidirectional transmission of the optical signal, preventing reflected light signals from reaching the laser 111 and affecting its normal operation.

The first light splitting module 120 is used to receive the source light signal output by the light source unit 110 and split it into two first light beams, namely, the light beam output by the first light splitting module 120 includes two first light beams. In an embodiment, the first light splitting module 120 includes two or more beam splitters 121, where the two or more beam splitters 121 comprise one or more first beam splitter and a second beam splitter, and the one or more first beam splitters and the second beam splitter are arranged in sequence along a preset direction. The first beam splitter is used to receive the upstream optical signal and split it into a first light beam emitted to the light amplification module 200 and a first split light beam emitted to the downstream beam splitter. The second beam splitter is used to receive the first split light beam output by the adjacent first beam splitter and reflect it to form the first light beam emitted to the light amplification module 200. For example, as shown in Figure 1, when the first light splitting module 120 is used to output two first light beams, the first light splitting module 120 includes a first beam splitter and a second beam splitter. The first beam splitter is used to receive the aforementioned source light signal and split it into a first light beam and a first split light beam, with the first light beam directed towards a light amplification module 200. The second beam splitter is used to receive the aforementioned first split light beam and reflect it to form the aforementioned first light beam, which is also directed towards a light amplification module 200. In some embodiments, the first light splitting module 120 can also be used to output three or more first light beams; the first light splitting module 120 includes two or more first beam splitters and a second beam splitter. The furthest upstream first beam splitter is used to receive the source light signal and split it into a first light beam and a first split light beam, with the first light beam directed towards a light amplification module 200; the remaining first beam splitters are used to receive the first split light beam output by the upstream and adjacent first beam splitter and split it into a first light beam directed towards a light amplification module 200 and a first split light beam directed towards the downstream beam splitter; the furthest downstream second beam splitter is used to receive the first split light beam output by the upstream and adjacent first beam splitter and reflect it to form the first light beam directed towards a light amplification module 200.

For the light amplification module 200, please refer to Figure 1, the light amplification module 200 is used to receive the first light beam and amplify the first light beam, and to transmit the amplified first light beam to the silicon photonic chip 300. In an embodiment, the LiDAR comprises two or more light amplification modules 200, each light amplification module 200 is used to receive and amplify one first light beam. In an embodiment, the light amplification module includes a semiconductor optical amplifier, which receives the first light beam output by the light source unit 100 through spatial optical coupling and transmits the amplified first light beam to the silicon photonic chip 300 through spatial optical coupling.

To facilitate the improvement of the coupling efficiency of the first light beam output by the light source module 100 into the light amplification module 200, the LiDAR includes a first lens module(s) 210. Each first lens module corresponds to one light amplification module 200 and includes a first lens. The first lens is located upstream of the light amplification module 200, and is used to focus the first light beam, and is used to output the focused first light beam to the light amplification module 200, to enhance the coupling efficiency of the first light beam into the light amplification module 200. Optionally, the same first lens is integrally formed in each first lens module 210 in sequence, forming a first lens array; this configuration can simplify the assembly process of the first lens module 210 to some extent, improving the assembly efficiency of the LiDAR.

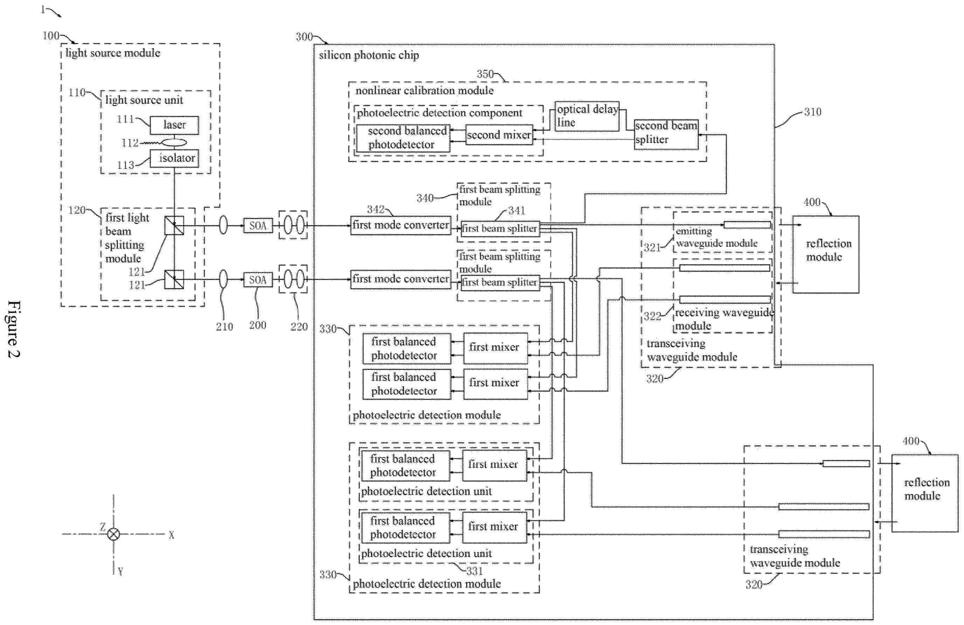

Furthermore, to facilitate the improvement of the coupling efficiency of the amplified first beam from the light amplification module 200 into the silicon photonic chip 300, the LiDAR also includes a second lens module(s) 220. Each second lens module is set corresponding to a light amplification module 200 and comprises a second lens. The second lens is located between the light amplification module 200 and the silicon photonic chip 300, and the second lens is used to focus the first beam output by the light amplification module 200 and output the focused first beam towards the silicon photonic chip 300, to enhance the coupling efficiency of the first beam into the silicon photonic chip 300. Optionally, refer to Figure 2, which illustrates a schematic diagram of another embodiment of the LiDAR provided in this application, the second lens module 220 includes two or more second lenses, and each second lens in the same second lens module 220 is arranged at intervals along the optical axis direction of the second lens. Therefore, even if there is a certain assembly error in the first second lenses, the second lenses can further focus the first beam output by the first second lens, correcting the position of the spot to some extent. The arrangement of multiple second lenses is advantageous for improving the coupling tolerance of the second lens module 220. Additionally, in conjunction with Figures 1 and 2, each second lens module 220 can also be configured such that the same second lens corresponds in sequence in each second lens module 220 and forms a single integrated second lens, form a second lens array. This configuration can simplify the assembly process of the second lens module 220 to some extent, enhancing the assembly efficiency of the LiDAR.

For the silicon photonic chip 300 mentioned above, refer to Figure 1, the silicon photonic chip 300 receives the first light beam through spatial optical coupling and includes a substrate, a cladding 310, a transceiving waveguide module 320, and an photoelectric detection module 330. In this embodiment, the substrate is made of silicon, which is used to lay the cladding 310. In other embodiments of this application, the substrate can also be made of other suitable materials, such as silicon nitride. The cladding 310 is carried on the substrate and is one of the main structures of the silicon photonic chip, serving as the structure to which the transceiving waveguide module 320 and the photoelectric detection module 330 are attached. The cladding 310 can be made of materials such as silicon dioxide and/or silicon nitride. The substrate is intended to support the cladding 310 during the manufacturing process of the silicon photonic chip 300; in some cases, the substrate can be omitted.

The transceiving waveguide module 320 is embedded in the cladding 310 and comprises an emitting waveguide module 321 and a receiving waveguide module 322. The emitting waveguide module 321 is configured to receive at least a part of the first light beam, i.e., the detection optical signal, and emit it outside the silicon photonic chip 300 to detect the target object. The emitting waveguide module 321 is embedded in the cladding 310 and extends along the illustrated first direction x; the refractive index of the emitting waveguide module 321 is greater than that of the cladding 310. Therefore, the emitting waveguide module 321 and the cladding 310 together form a structure for stable light transmission, the optical signal to be transmitted along the emitting waveguide module 321 without easily overflowing from the cladding 310 to outside the silicon photonic chip 300. For example, when the cladding 310 is made of silicon dioxide, the emitting waveguide module 321 can be made of silicon nitride with a higher refractive index, or other materials with refractive indices greater than that of the cladding 310, such as silicon. The receiving waveguide module 322 is used to receive the echo optical signal formed by the target object reflecting the detection light and transmit it to the photoelectric detection module 330. The receiving waveguide module 322 is embedded in the cladding 310 and is arranged opposite the emitting waveguide module 321 along the illustrated second direction y. One end of the emitting waveguide module 321 that emits the detection optical signal and one end of the receiving waveguide module 322 that receives the echo optical signal are located at the same end of the silicon photonic chip 300. The refractive index of the receiving waveguide module 322 is greater than that of the cladding 310. Therefore, the receiving waveguide module 322 and the cladding 310 together form a structure for stable light transmission, the optical signal to be transmitted along the receiving waveguide module 322 without easily overflowing from the cladding 310 to outside the silicon photonic chip 300. For example, when the cladding 310 is made of silicon dioxide, the receiving waveguide module 322 can be made of silicon with a higher refractive index, or other materials with refractive indices greater than that of the cladding 310. The "first direction" referred to in this application means the extension direction of the emitting waveguide module 321, which is perpendicular to the thickness direction z of the silicon photonic chip 300, and the thickness direction of the silicon photonic chip 300 is the same as that of the cladding 310. The "second direction" in this application refers to a direction perpendicular to the thickness direction z and the first direction x mentioned above. In other words, the second direction y, the first direction x, and the thickness direction z are mutually perpendicular, and the second direction y is also a direction pointing from the emitting waveguide module 321 to the receiving waveguide module 322.

The above-mentioned emitting waveguide module 321 and receiving waveguide module 322 are both embedded in the cladding 310, forming an integrated transceiver unit. The distance between them is small, which can share use of lens modules/scanner devices without the need for optical elements such as birefringent crystals or ring resonators, significantly simplify the system architecture. In some embodiments, the distance between the emitting waveguide module 321 and the receiving waveguide module 322 along the second direction y is less than 20 micrometers; for example, this distance can be less than 10 micrometers, or even less than 5 micrometers.

The photoelectric detection module 330 is set in the cladding 310. On the one hand, it is used to receive the local oscillator light signal of the LiDAR, and on the other hand, it is used to receive the echo optical signal output by the receiving waveguide module 322. The local oscillator light signal and the echo optical signal will beat to generate beat frequency signals. The photoelectric detection module 330 is also used to convert the beat frequency signals into corresponding electrical signals. There are various ways to generate the local oscillator light signal, and this application will explain some implementation methods of the local oscillator light signal and the corresponding structure of the silicon photonic chip 300 in the following sections.

In an embodiment, the photoelectric detection module 330 corresponds one-to-one with the transceiving waveguide module 320, the photoelectric detection module 330 comprise at least one photoelectric detection unit 331. The photoelectric detection unit 331 is connected to the receiving waveguide module 322 to receive one path of the echo optical signal and one path of the local oscillator optical signal. The photoelectric detection unit 331 further includes a first mixer and a first balanced photodetector. The first mixer has two input ports, one input port for receiving the local oscillator optical signal and the other input port for receiving the echo optical signal output by the receiving waveguide module 322. Thus, the local oscillator optical signal and the echo optical signal undergo beat frequency within it to obtain two beat frequency signals, namely the first beat frequency optical signal and the second beat frequency optical signal. Optionally, the first mixer is a 180-degree first mixer, with a phase difference of 180 degrees between the two optical signals it outputs. The first balanced photodetector is connected to the two outputs of the first mixer and is used to perform balance detection on the first beat frequency optical signal and the second beat frequency optical signal, outputting the first beat frequency signal, whose frequency matches that of the first/second beat frequency optical signals. Although this embodiment is described using the example of the photoelectric detection unit 331 including the first mixer and the first balanced photodetector, the present application is not limited thereto, as long as the photoelectric detection module can receive the local oscillator optical signal and the echo optical signal and convert their beat frequency signals into electrical signals. In some embodiments, the photoelectric detection module includes an photodetector; this photodetector is used to receive the local oscillator optical signal and the echo optical signal to beat them, and it is also used to convert the obtained beat frequency optical signals into electrical signals (the first beat frequency signal).

Next, a brief explanation will be provided on the formation of the local oscillator light signal as described above. In an embodiment, the silicon photonic chip 300 further includes a first beam splitting module(s) 340. The first beam splitting module 340 corresponds one-to-one with the light amplification module 200, and is used to receive the first light beam output by the light amplification module 200 and split it. The beam output by the first beam splitting module 340 includes the detection optical signal and the local oscillator light signal. The emitting waveguide module 321 is connected to the output end of the first beam splitting module 340 to receive the detection optical signal. The photoelectric detection unit 331 is connected to the output end of the first beam splitting module 340 to receive the local oscillator light signal. Specifically, the first beam splitting module 340 comprises a first beam splitter 341, which is used to receive the amplified first light beam and split it to form the detection optical signal, and the same quantity of local oscillator light signals as the photoelectric detection unit 331. In other embodiments, when the first beam splitting module 340 needs to split into three or more optical signals, the first beam splitting module 340 can also be a combination including multiple first beam splitters 341. The silicon photonic chip 300 further includes a first mode converter 342, which is located upstream of the first beam splitter 341 at the input end and is used to improve the mode matching when the silicon photonic chip 300 receives the first light beam through spatial optical coupling, thereby enhancing the coupling efficiency of this process.

Furthermore, for the convenience of detecting and calibrating the source light signal output by the light source module 100, the silicon photonic chip 300 further includes a nonlinear calibration module 350. Accordingly, one of the first beam splitting modules 340 mentioned above is used to receive the first light beam output by the light amplification module 200, and split it into the local oscillator light signal, detection optical signal, and nonlinear calibration signal. The nonlinear calibration module 350 comprises a second beam splitter, an optical delay line, and an photoelectric detection component. The second beam splitter is used to receive the nonlinear calibration signal and split it into a first calibration signal and a second calibration signal. The photoelectric detection component is used to receive the first calibration signal and the second calibration signal, where at least one input end of the photoelectric detection component is connected to the output end of the optical delay line via the optical delay line to the second beam splitter, so that the optical path of the first calibration signal and the second calibration signal received by the photoelectric detection component is different, thereby causing a beat frequency between the first calibration signal and the second calibration signal. Consequently, the photoelectric detection component can generate a second beat frequency signal for verifying the linear condition of the frequency modulation of the first light beam. The photoelectric detection component can use devices similar to the photoelectric detection module mentioned above, for example, it can include a second optical mixer and a second balanced photodetector.

Furthermore, the LiDAR includes multiple reflection modules 400. The reflection modules 400 correspond one-to-one with the transceiving waveguide module 320 mentioned above. The reflection modules 400 are arranged relative to the emitting waveguide module 321 along the illustrated first direction x at the emitting end, which is used to receive the detection optical signal emitted by the emitting waveguide module 321 and reflect it, so that the detection optical signal is emitted in a direction that is non-90 degrees to the thickness direction Z of the silicon photonic chip 300. The reflection modules 400 are arranged relative to the incident end of the receiving waveguide module 322 along the illustrated first direction x, which is used to receive the echo optical signal and reflect it so that the echo optical signal enters the receiving waveguide module 322. Optionally, the reflection modules 400 have a triangular prism-like structure, with a reflective coating on one side to form a reflecting surface for reflecting the light signal. Additionally, the reflection modules 400 can optionally be integrally formed, facilitating the integral installation of each reflection module 400.

Furthermore, the LiDAR includes a scanning module, which receives and reflects the detection light signal output by the silicon photonic chip 300. The scanning module is rotatable relative to the silicon photonic chip 300, so the detection light signal emitted to the outside of the LiDAR forms a detection field. However, as the scanning module is a movable element, when the echo light signal returns to the scanning module, the scanning module has already deviated by an angle, causing the echo light signal to fall at a position on the silicon photonic chip 300 different from the output end of the emitting waveguide module 321, meaning the spot of the echo light signal has a certain offset compared to the spot of the detection light signal; where the distance of the offset is related to the flight time/distance of the light signal during the detection process, the above effect is referred to as the LiDAR's walk-off effect. In an embodiment, to ensure that the receiving waveguide module 322 can receive the echo light signal within the target detection distance range of the LiDAR, the above transceiving waveguide module 320 is configured with a first distance L1 between the output end of the emitting waveguide module 321 and the input end of the receiving waveguide module 322, where L1 $\leq 15\mu$m. This configuration ensure that the first distance L1 is small so that the input end of the receiving waveguide module 322 can receive the echo light signal with a smaller walk-off effect, which can receive the echo light signal reflected by objects closer in distance, reducing the detection blind zone and enhancing the overall detection distance range. Optionally, L1 $\leq 10\mu$m or L1 $\leq 5\mu$m; since the minimum detection distance of the LiDAR is small, such as 0.2m, the offset caused by the walk-off effect is also small, and the above setting ensure that the echo light signal can be received at close distances. Embodiments of this application defines the direction in which the emitting waveguide module 321 emits the detection light signal as the first direction x and defines the direction pointing from the emitting waveguide module 321 to the receiving waveguide module 322, i.e., the opposite direction, as the second direction y. This second direction y should match a faster scanning direction of the scanning module; in an embodiment, the horizontal scanning of the scanning module (with the scanning axis extending vertically) is significantly faster than the vertical scanning (with the scanning axis extending horizontally), and the offset direction caused by the horizontal scanning matches the second direction y; in other embodiments, if the vertical scanning speed of the scanning module is significantly faster than the horizontal scanning speed, the offset direction caused by the vertical scanning should match the second direction y.

The range walk-off effect caused by horizontal scanning corresponds to the second direction y; and by arranging each reflection module 400 staggered along the illustrated first direction x, the detection optical signals reflected by each reflection module 400 can also be staggered in the illustrated first direction x, each detection optical signal is staggered in the vertical direction of the LiDAR. The quantity of lines of the LiDAR can be increased, thereby improving the detection resolution of the LiDAR.

The LiDAR provided in this application includes a light source module 100, a light amplification module 200, and a silicon photonic chip 300. The silicon photonic chip 300 comprises a cladding 310, a transceiving waveguide module 320, and an photoelectric detection module 330. The transceiving waveguide module 320 is embedded in the cladding 310 and includes an emitting waveguide module 321 and a receiving waveguide module 322. The emitting waveguide module 321 is used to receive a detection optical signal and emit the detection optical signal out of the silicon photonic chip 300 to detect a target object. The receiving waveguide module 322 is used to receive an echo optical signal. The LiDAR provided in this embodiment emits a detection optical signal and receives an echo optical signal through the silicon photonic chip 300. Compared to the solution that the detection optical signal is transmitted through optical fibers and the echo optical signal is received through the silicon photonic chip 300, the integration level of the LiDAR provided in this embodiment is higher.

In the embodiments provided in this application, the laser radar sets the light amplification module 200 upstream of the silicon photonic chip 300 in the optical path. In other embodiments, the light amplification module 200 can also be set downstream of the transmitting waveguide module 321 to ensure a higher power of the first beam emitted to the scanning module. However, the volume of the light amplification module 200 is significantly larger compared to the transmitting waveguide module 321, which causes the close-range echo optical signal to be blocked by the light amplification module 200, resulting in a larger detection blind zone for the LiDAR. Additionally, the distance between the transmitting waveguide module and the reflecting mirror is generally small, making it difficult to place the light amplification module 200 between them. In the embodiments of this application, the light amplification module 200 is placed upstream of the silicon photonic chip and the first beam is coupled into the silicon photonic chip using spatial optical coupling. The emitting waveguide module 321 of the silicon photonic chip 300 uses silicon nitride waveguides. This setup allows the light amplification module 200 to be easily installed between the light source module and the silicon photonic chip 300, reducing the assembly difficulty of the light amplification module 200. It also does not affect the reception of the echo optical signal, reducing the blind zone during close-range detection. Moreover, it enables the first beam to be efficiently coupled into the silicon photonic chip and, combined with the use of silicon nitride emitting waveguides, ensures that the emitting waveguide module 321 can carry and emit a higher power of the first beam.

Although the above embodiments are illustrated using the example of the first light beam splitting module 120 including multiple beam splitters 121, this application is not limited thereto. In other embodiments, the first light beam splitting module 120 can also have other structural forms, as long as it can receive the source light signal mentioned above and split it, so that the beam output by the first light beam splitting module 120 includes multiple first light beams.

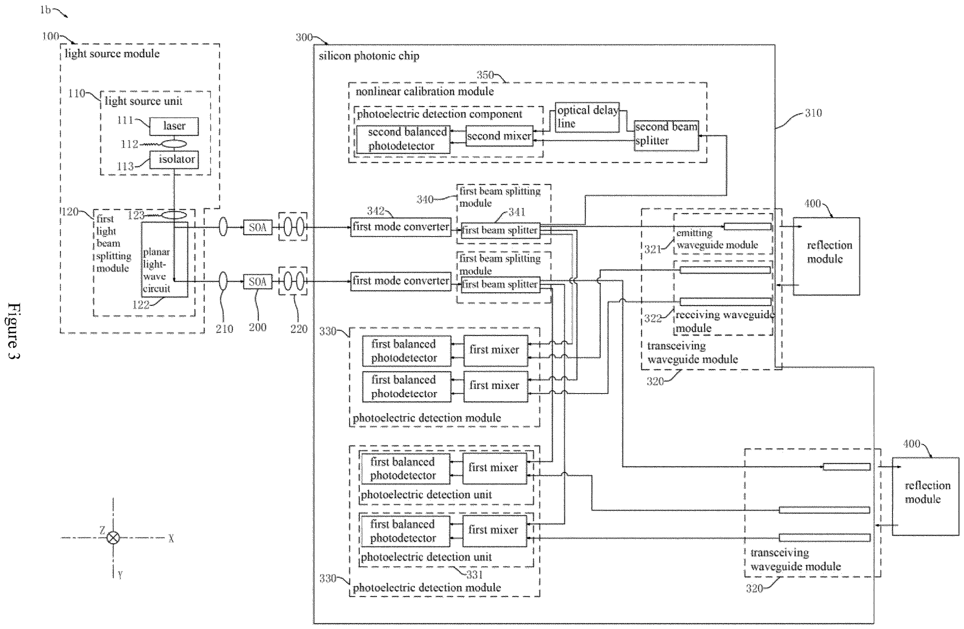

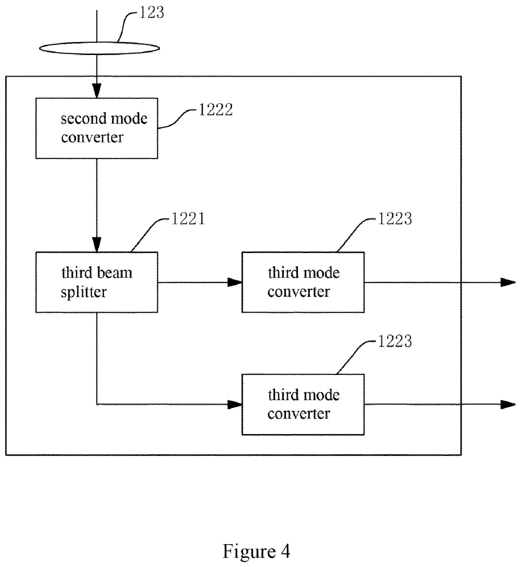

For example, refer to Figure 3, which illustrates a schematic diagram of a LiDAR 1b provided in another embodiment. The main difference between this LiDAR 1b and the LiDAR 1 in the above embodiment is that the first light beam splitting module 120 does not use a combination of multiple beam splitters but uses a Planar Lightwave Circuit (PLC) 122 for beam splitting. Specifically, refer to Figure 4, which shows a schematic diagram of the PLC 122. The PLC 122 includes a third beam splitter 1221; the third beam splitter 1221 is used to receive the source light signal generated by the light source unit 110 and split it into at least two first light beams. To improve the mode field adaptation when the source light signal enters the PLC 122, the first light beam splitting module 120 further includes a first focusing lens 123 located upstream of the PLC 122. The first focusing lens 123 is used to focus the source light signal output by the light source module 100 and output it to the PLC 122. Furthermore, the PLC 122 also includes a second mode converter 1222; the second mode converter 1222 is located upstream of the input end of the third beam splitter 1221, and is used to receive the aforementioned source light signal and transmit it to the third beam splitter 1221. The configuration of the second mode converter 1222 can improve the mode field adaptation when the source light signal enters the silicon photonic chip 300. Furthermore, the PLC 122 also includes a third mode converter 1223; the downstream of the output end of the third beam splitter 1221 is equipped with the third mode converter 1223, which is used to receive the first light beam and transmit it outside the PLC 122. The setting of the third mode converter 1223 can improve the mode field adaptation when the first light beam is emitted outside the PLC 122.

The above embodiments are described as examples where the light source module 100 splits into two or more first light beams through the first light beam splitting module 120 and one of the first light beams is further split into the local oscillator light signal on the silicon photonic chip 300, but the present application is not limited thereto; in other embodiments of the present application, it may also split a second light beam to be used as the local oscillator light signal before entering the silicon photonic chip 300, that is, the light source module 100 is also used to generate a second light beam.

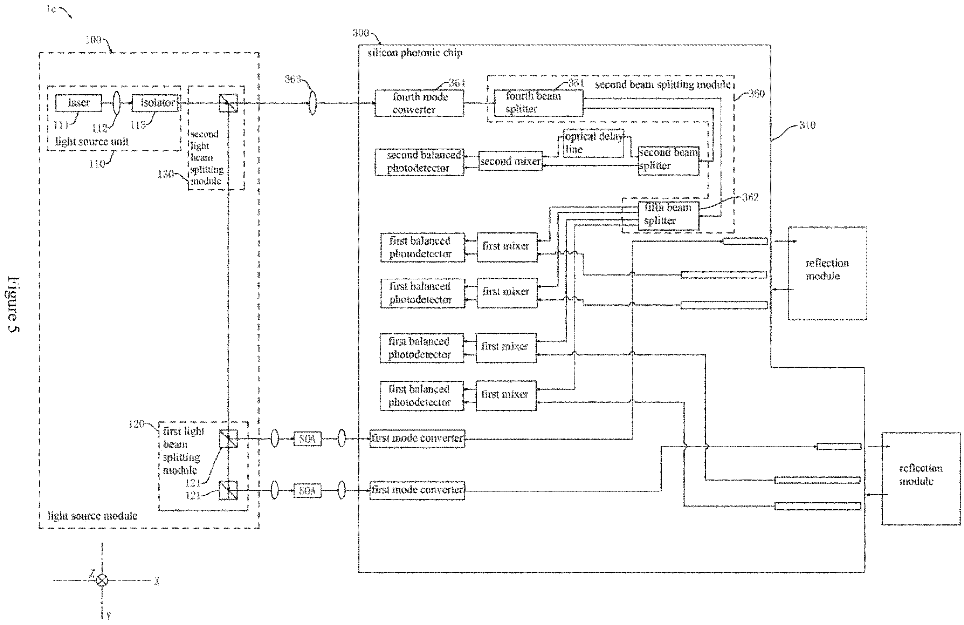

For example, refer to Figure 5, which illustrates a schematic diagram of a LiDAR 1c provided in another embodiment, with the main difference from the LiDAR 1 shown in the embodiment of Figure 1 being: the light source module 100 of the LiDAR 1c further includes a second light beam splitting module 130. The second light beam splitting module 130 is located between the light source unit 110 and the first light splitting module 120, which is used to receive the source light signal and split it into a second light beam directed towards the silicon photonic chip 300 and a second split light beam directed towards the first light splitting module 120. The first light splitting module 120 mentioned above is used to receive the second split light beam and split it into two or more first light beams; correspondingly, the first mode converter 342 and the emitting waveguide module 321 receive the first light beam successively, without the need for additional beam splitters on this optical path. The silicon photonic chip 300 also includes a second splitting module 360, which is used to receive the aforementioned second light beam and split it into at least two or more local oscillator light signals; correspondingly, the photoelectric detection module 330 is connected to the second splitting module 360 to receive the local oscillator light signal. Specifically, the second splitting module 360 comprises a fourth splitter 361 and a fifth splitter 362; wherein, the fourth splitter 361 is used to receive the second light beam and split it into a third light signal and a nonlinear calibration light signal, the third light signal is further split into multiple local oscillator light signals via the fifth splitter 362, while the nonlinear calibration light signal flows to the nonlinear calibration module.

To further enhance the coupling efficiency of the second light beam into the silicon photonic chip 300, the LiDAR also includes a second focusing lens 363. The second focusing lens 363 is positioned between the second light beam splitting module 130 and the silicon photonic chip 300, designed to receive the second light beam and focus it to transmit the focused second light beam to the silicon photonic chip 300. To further improve the coupling efficiency of the second light beam into the silicon photonic chip 300, the above-mentioned second beam splitting module 360 also includes a fourth mode converter 364. The fourth mode converter 364 is used to receive the aforementioned second light beam and transmit the second light beam to the fourth beam splitter 361 to improve the mode matching situation when the second light beam enters the silicon photonic chip 300 from free-space light, thereby enhancing the coupling efficiency.

Furthermore, based on the embodiment shown in Figure 5, adaptive modifications can also be made in combination with other embodiments such as those shown in Figures 2 to 4.

The above is a general description of the structure of various modules in the LiDAR 1 (1b, 1c). The following provides a detailed explanation of the specific structure of the emitting waveguide module 321 and the receiving waveguide module 322 in the transceiving waveguide module 320 of the silicon photonic chip 300.

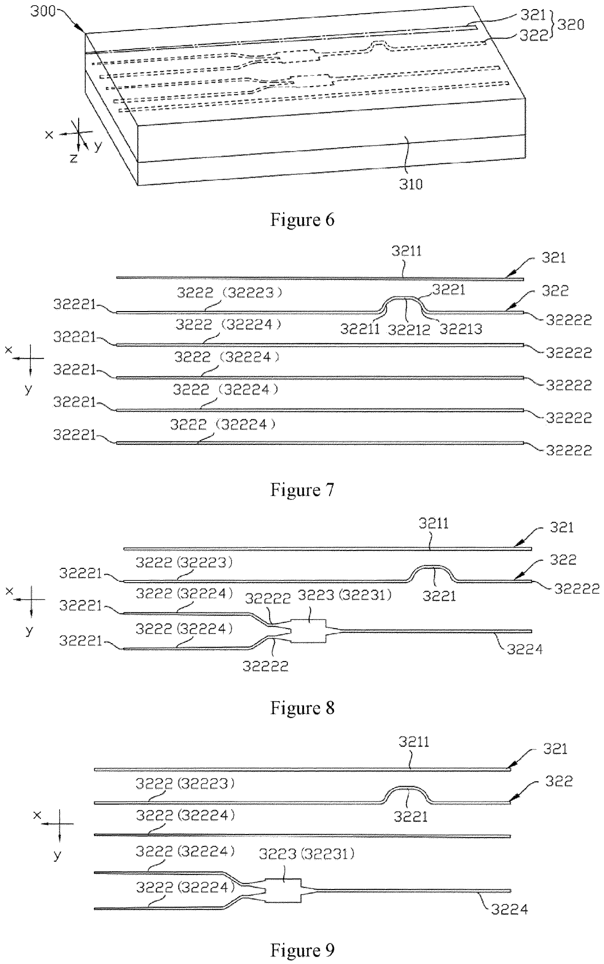

Refer to Figure 6, in an embodiment of the silicon photonic chip 300 provided in this application, showing a partial perspective view. It illustrates the transceiving waveguide module 320, which comprises the emitting waveguide module 321 and the receiving waveguide module 322. When observed along the thickness direction z, both the emitting waveguide module 321 and the receiving waveguide module 322 extend integrally along the depicted first direction x. The receiving waveguide module 322 is arranged opposite the emitting waveguide module 321 along the depicted second direction y. One end of the emitting waveguide module 321 (left end as shown in Figure 3) emitting the detection optical signal and one end of the receiving waveguide module 322 receiving the echo optical signal (left end as shown in Figure 3) are located at the same end of the silicon photonic chip 300. In other words, the silicon photonic chip 300 is configured to perform the emission of the detection optical signal and the reception of the echo optical signal at the same end. The emitting waveguide module 321 and the receiving waveguide module 322 are designed to couple the echo optical signal received by the emitting waveguide module 321 into the receiving waveguide module 322.

Due to the inclusion of a scanning module in the LiDAR, during the operation of the LiDAR, the scanning module generates motion (such as rotation, etc.), causing the transmission paths of the detection optical signal and the echo optical signal before and after the scanning device to no longer be consistent. The echo optical signal may no longer enter the emitting waveguide module 321 and undergo an offset relative to the emitting waveguide module 321, resulting in the above-mentioned walk-off effect. The walk-off effect can cause the focal spot of the echo optical signal to shift along the second direction y, where the offset amount (dy) of the echo optical signal is approximately proportional to the distance (S) of the target object. Thus, the offset amount of the echo optical signal from distant target objects is relatively large, while the offset amount of the echo optical signal from nearby target objects is relatively small. When the echo optical signal falls on the receiving waveguide module 322, the receiving waveguide module 322 can receive the echo optical signal and transmit it downstream. Due to the distance between the emitting waveguide module 321 and the receiving waveguide module 322, when the target object is close to the LiDAR, the spot of the echo light may fall on the emitting waveguide module 321 or the gap between the emitting waveguide module 321 and the receiving waveguide module 322, thus not being received by the receiving waveguide module 322, resulting in a blind zone for close-range detection in the LiDAR.

In some embodiments, the emitting waveguide module 321 and the receiving waveguide module 322 are configured to let the optical signal transmitted by the emitting waveguide module 321 to be coupled into the receiving waveguide module 322. Not only the receiving waveguide module 322 can receive the echo optical signal for transmission to the downstream photoelectric detection module 330, but the emitting waveguide module 321 can also receive the echo optical signal and couple the received echo optical signal into the receiving waveguide module 322 for transmission to the downstream photoelectric detection module 330. Therefore, the embodiments of the present application can improve the efficiency of receiving the echo optical signal and reduce the field of view blind zone of the LiDAR. Additionally, since the distance between the emitting waveguide module 321 and the receiving waveguide module 322 is generally less than or approximately equal to twice the mode field size of the echo optical signal, when the spot of the echo optical signal is located between the emitting waveguide module 321 and the receiving waveguide module 322, it will at least fall on one of them, thus effectively eliminating the close-range detection blind zone of the LiDAR. The distance between the emitting waveguide module 321 and the receiving waveguide module 322 refers to the distance between the center of the waveguide closest to the receiving waveguide module in the emitting waveguide module and the center of the waveguide closest to the emitting waveguide module in the receiving waveguide module.

In an embodiment, refer to Figure 7, which illustrates a schematic diagram of the emitting waveguide module 321 and the receiving waveguide module 322 provided in an embodiment. The emitting waveguide module 321 has a first coupling region 3211, and the receiving waveguide module 322 has a second coupling region 3221. Along the thickness direction z, the first coupling region 3211 and the second coupling region 3221 are arranged opposite each other along the second direction y. The second coupling region 3221 in the receiving waveguide module 322 is bent towards the direction closer to the emitting waveguide module 321 relative to an adjacent part located upstream of the second coupling region 3221 in the receiving waveguide module 322, so that the first coupling region 3211 and the second coupling region 3221 are configured to couple an optical signal transmitted by the emitting waveguide module 321. In the embodiments of the present application, upstream and downstream are defined with reference to the direction of transmission of the same optical signal. The component that the same optical signal passes through first is considered upstream compared to the component it passes through later. For example, the adjacent part in the receiving waveguide module 322 located upstream of the second coupling region 3221 refers to the part that the same echo optical signal passes through before passing through the second coupling region 3221.

Next, a detailed description of the structure of the receiving waveguide module 322 is provided.

In an embodiment, the aforementioned receiving waveguide module 322 comprises at least two receiving waveguides 3222. Each receiving waveguide 3222 includes oppositely positioned first end 32221 and second end 32222; where the first end 32221 is for receiving the echo optical signal to let the echo optical signal to enter the receiving waveguide module 322, and the second end 32222 is for transmitting the echo optical signal to downstream media. The receiving waveguides 3222 are spaced apart along the aforementioned second direction y. The receiving waveguide in the receiving waveguide module 322 adjacent to the emitting waveguide module 321 is defined as the first receiving waveguide 32223, and the remaining receiving waveguides are defined as the second receiving waveguide 32224. In an embodiment, the first receiving waveguide 32223 is provided with the aforementioned second coupling region 3221, which is bent towards the direction closer to the emitting waveguide module 321 relative to the upstream part. Correspondingly, the emitting waveguide module 321 has a first coupling region 3211 positioned opposite to the second coupling region 3221. The first coupling region 3211 and the second coupling region 3221 are configured to let the optical signal transmitted by the emitting waveguide module 321 to enter the first receiving waveguide 32223, so that the echo light reflected by a nearby target object, after being received by the emitting waveguide module 321, passes through the first coupling region 3211 and the second coupling region 3221 to enter the first receiving waveguide 32223.

The extension shape of the second coupling region 3221 is not specifically limited; for example, the second coupling region 3221 can extend as a whole curve, or the second coupling region 3221 can also include parts with curved extension and parts with straight extension. The curve may include an arc, or the curve may consist of at least two arcs connected in sequence, with different radii of curvature for adjacent arcs. The straight line can be parallel to the second direction y or intersect with the second direction y. The extension shape of the first coupling region 3211 can protrude relative to its upstream and/or downstream structures, or it can be set without protrusion relative to its upstream and/or downstream structures, as long as the first coupling region 3211 and the second coupling region 3221 meet the above conditions.

To reduce optical loss, the smooth transition connection can be achieved between the second coupling region 3221 and the other parts of the first receiving waveguide 32223; if the extension shape of the second coupling region 3221 includes at least two sequentially connected arcs, smooth transition connection can be achieved between adj acent two arcs, if the extension shape of the second coupling region 3221 includes a straight line and an arc connected in sequence, smooth transition connection can be achieved between the straight line and the arc.

If the emitting waveguide module 321 is coupled to the receiving waveguide module 322 through the second coupling region 3221, the coupling ratio between the emitting waveguide module 321 and the receiving waveguide module 322 can be adjusted by changing the shape of the second coupling region 3221, as well as the relative positional relationship between the second coupling region 3221 and the emitting waveguide module 321. For example, adjustments to the coupling ratio can be achieved by altering parameters such as the spacing between the second coupling region 3221 and the first coupling region 3211, the extension length of the second coupling region 3221 along the first direction x, and so on. Specifically, the spacing between the second coupling region 3221 and the first coupling region 3211 can be defined as the minimum distance between them along the second direction y.

For example, if the second coupling region 3221 includes sequentially connected first subpart 32211, second subpart 32212, and third subpart 32213, the second subpart 32212 is located on one side of the first subpart 32211 near the first coupling region 3211, and the second subpart 32212 is located on one side of the third subpart 32213 near the first coupling region 3211. The extension direction of the second subpart 32212 is roughly consistent with the extension direction of the first emitting waveguide module 321, that is, the second subpart 32212 roughly extends along the first direction x, then the spacing between the second coupling region 3221 and the first coupling region 3211 can be: the distance between the second subpart 32212 and the first coupling region 3211.

A smooth transition connection can be made between the first subpart 32211 and the second subpart 32212, a smooth transition connection can be made between the first subpart 32211 and other parts of the first receiving waveguide 32223, a smooth transition connection can be made between the third subpart 32213 and the second subpart 32212, and a smooth transition connection can be made between the third subpart 32213 and other parts of the first receiving waveguide 32223. The first subpart 32211 can extend overall in a curved manner, or include a part with a curved extension and a part with a straight extension, the second subpart 32212 can extend overall in a curved manner, or include a part with a curved extension and a part with a straight extension.

The arrangement of multiple receiving waveguides 3222 is beneficial for increasing the area available for light reception along the second direction y of the receiving waveguide module 322, thereby enhancing the overall detection range of the LiDAR. In an embodiment, the receiving waveguide module 322 comprises at least three receiving waveguides 3222, one of which is the aforementioned first receiving waveguide 32223, and the rest are two or more second receiving waveguides 32224, arranged sequentially along the second direction y. Each downstream of the receiving waveguide 3222 individually be connected to an photoelectric detection unit 331 in the photoelectric detection module 330, to detect the echo optical signal output by the receiving waveguide 3222 and the local oscillator light signal transmitted internally in the LiDAR; and each photoelectric detection unit 331 also be connected to a signal processing module to process the electrical signals converted by the photoelectric detection unit 331. Consequently, as the quantity of receiving waveguides 3222 increases, both the photoelectric detection units 331 and the signal processing modules increase accordingly, leading to a significant increase in the device cost of the LiDAR.

To overcome the above shortcomings, in an embodiment, the receiving waveguide module 322 further includes at least one beam combiner, which comprises two input ends and one output end. The input ends are connected to the receiving waveguides 3222 to combine the two receiving waveguides 3222. Refer to Figure 8. The at least one beam combiner 3223 includes a first beam combiner 32231, where each input end of the first beam combiner 32231 is connected to the second receiving waveguide 32224, i.e., connected to the receiving waveguides 3222 other than the first receiving waveguide 32223. The output end of the first beam combiner 32231 is connected to a first transmission waveguide 3224. Consequently, the echo light received by the two receiving waveguides 3222 connected to the beam combiner 3223 will be output downstream to the photoelectric detection unit 331 via the first transmission waveguide 3224. This setup can reduce the quantity of photoelectric detection units 331 and the processing of the signal processing module mentioned above, reduce the overall cost of the LiDAR.

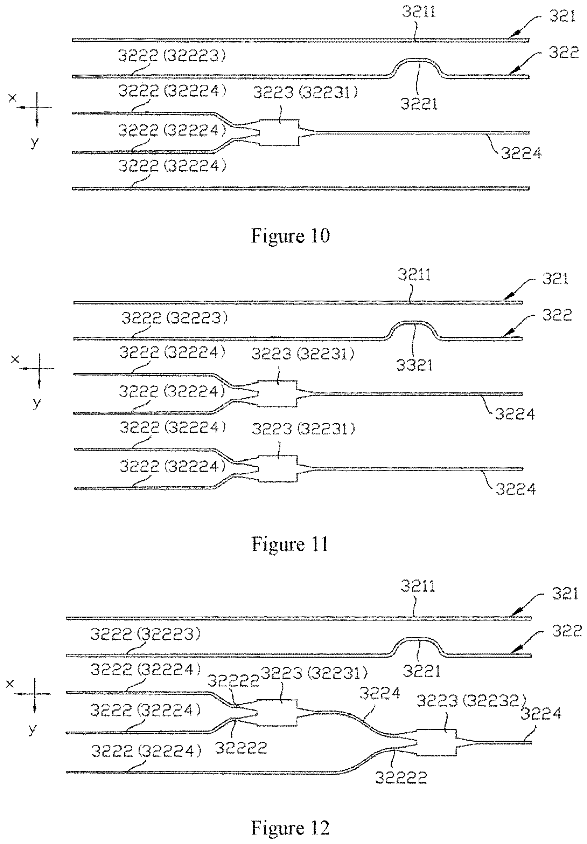

When there are a larger quantity of receiving waveguides 3222, refer to Figure 9, where a second receiving waveguide 32224 connected to the first beam combiner 32231 can also be set towards one side of the first receiving waveguide 32223; refer to Figure 10, where a second receiving waveguide 32224 connected to the first beam combiner 32231 can also be set away from one side of the first receiving waveguide 32223. The quantity of first beam combiners 32231 can be one as shown in Figures 8 to 10, or multiple as shown in Figure 11 when there are a larger quantity of receiving waveguides 3222.

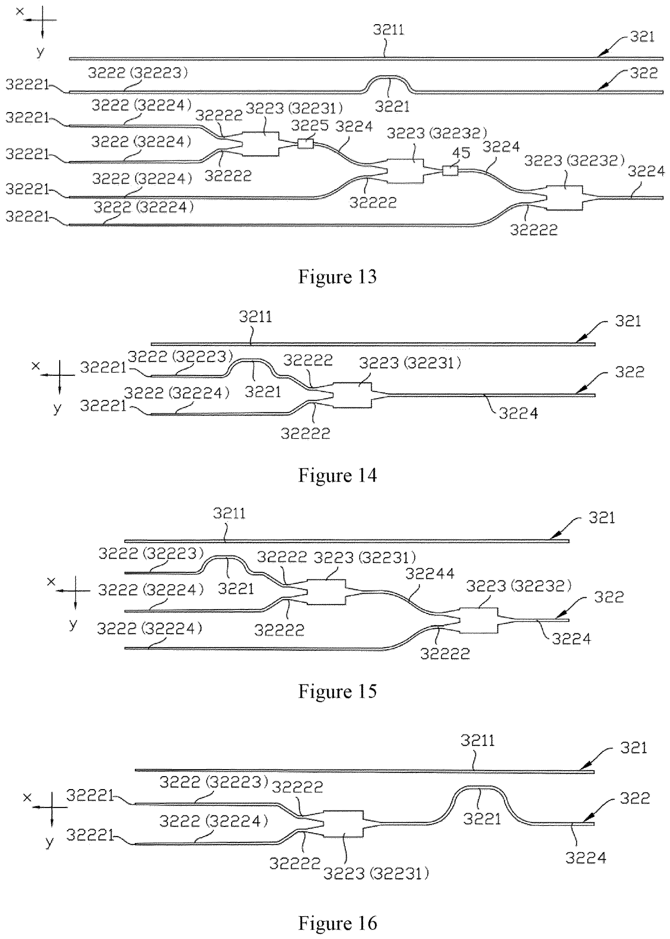

Refer to Figure 12, when the receiving waveguide module 322 includes at least four receiving waveguides 3222, the above at least one beam combiner 3223 may also include a second beam combiner 32232. The first beam combiner 32231 and the second beam combiner 32232 are serially arranged. Taking the case where at least one beam combiner 3223 includes a second beam combiner as an example, each input end of the first beam combiner 32231 is connected to a second receiving waveguide 32224, and the output end is connected to a first transmission waveguide 3224; one input end of the second beam combiner 32232 is connected to the output end of the upstream beam combiner 3223, i.e., the output end of the first beam combiner 32231, via the first transmission waveguide 3224, and the other input end is connected to another second receiving waveguide 32224, and the output end of the second beam combiner 32232 is connected to a first transmission waveguide 3224. The receiving waveguides 3222 connected to the first beam combiner 32231 and the second beam combiner 32232 are adjacent, meaning that the three receiving waveguides 3222 connected by the two beam combiners 3223 are sequentially adjacent receiving waveguides 3222; thus, the echo optical signals received by these three receiving waveguides 3222 will all be transmitted downstream to the photoelectric detection unit 331 via the first transmission waveguide 3224 at the output end of the second beam combiner 32232, further reducing the quantity of photoelectric detection units 331. As for the quantity of second beam combiners 32232, it can be one as shown in Figure 12, or multiple as shown in Figure 13. The first beam combiner 32231 is serially connected to multiple second beam combiners 32232, where one input end of each second beam combiner 32232 is connected to the output end of the upstream beam combiner 3223 via the first transmission waveguide 3224, the other input end is connected to another second receiving waveguide 32224, and the output end of each second beam combiner 32232 is connected to a first transmission waveguide 3224, and the receiving waveguides 3222 connected by adjacent two beam combiners 3223 are adjacent.

Furthermore, considering that the farther the receiving waveguide 3222 corresponding to the emitting waveguide module 321, the longer the detection distance, and the lower the energy of the received echo optical signal, there may be a certain proportion of loss after the echo optical signal passes through the beam combiner 3223; therefore, it can be arranged that: between two adjacent beam combiners 3223, the downstream beam combiner 3223 connected to the receiving waveguide 3222 is farther from the emitting waveguide module 321 than the upstream beam combiner 3223 connected to the receiving waveguide 3222, to reduce the quantity of beam combiners 3223 that the long-distance echo optical signal passes through, thereby reducing the loss of the long-distance echo optical signal during transmission in the receiving waveguide module 322, to ensure that the energy finally output meets the requirements. In addition, as the higher energy of the short-distance echo optical signal, even if it passes through a larger quantity of beam combiners 3223, the energy finally output by the receiving waveguide module 322 can still meet the requirements.

If the echo optical signal falls on two adjacent receiving waveguides 3222 connected by each beam combiner 3223 at the same time, for example, the first end 32221 of the two receiving waveguides 3222 at the bottom as shown in Figure 13, when the echo photon signals received by each receiving waveguide 3222 finally reach the same beam combiner 3223 for combining, the quantity of beam combiners 3223 passed through is different, resulting in a phase difference. The different phase differences may lead to optical power loss, for instance, when the phase difference reaches $\pi$, coherent cancellation may occur. To overcome this shortcoming, the silicon photonic chip 300 further includes a phase compensator 3225. The phase compensator 3225 is located between the two serially connected beam combiners 3223 and is used to compensate for the phase change that occurs when the echo optical signal passes through the upstream beam combiner 3223, eliminate the phase difference, and reduce optical power loss.

Although this embodiment is illustrated with the beam combiner 3223 connected to the second receiving waveguide 32224, in other embodiments of the present application, the beam combiner 3223 can also be connected to the first receiving waveguide 32223.

For example, refer to Figure 14. The receiving waveguide module 322 comprises two or more receiving waveguides 3222, and at least one beam combiner 3223 includes a first beam combiner 32231. The main difference between this embodiment and the one shown in Figure 8 is that one input end of the first beam combiner 32231 is connected to the first receiving waveguide 32223, while the other input end is connected to a receiving waveguide 3222 adjacent to the first receiving waveguide 32223, and its output end is connected to a first transmission waveguide 3224. Additionally, as the first beam combiner 32231 is connected to the first receiving waveguide 32223, this embodiment can further reduce the quantity of output ports at the end of the receiving waveguide module 322, thereby helping to lower the device cost of the LiDAR. The quantity of first beam combiners 32231 can be one or multiple, corresponding to the quantity of receiving waveguides 3222 when there are more of them.

As the first receiving waveguide 32223 has a second coupling region 3221, the second coupling region 3221 is bent towards the direction closer to the emitting waveguide module 321 relative to the upstream part. As a result, the lengths of the first receiving waveguide 32223 and the second receiving waveguide 32224 connected to the first beam combiner 32231 may be different. Having different lengths for the two receiving waveguides 3222 connected to the same beam combiner 3223 may introduce a phase difference in the echo optical signals transmitted to the beam combiner 3223. To address this, the lengths of multiple receiving waveguides 3222 connected to the same beam combiner 3223 can be designed to satisfy conditions such as: the phase difference of each receiving waveguide 3222 transmitted to the same beam combiner 3223 is an integer multiple of the wavelength of the detection optical signal, to eliminate phase differences and reduce optical power loss. Phase differences among multiple receiving waveguides 3222 connected to the same beam combiner 3223 can also be eliminated through methods like phase compensators. These phase compensators can be placed on the receiving waveguides 3222 connected to the same beam combiner 3223 that do not have a second coupling region 3221, to avoid the complexity that would arise from simultaneously setting the second coupling region 3221 and phase compensators on the same receiving waveguide 3222. There are various ways to eliminate the aforementioned phase differences.

For example, refer to Figure 15. The receiving waveguide module 322 includes three or more receiving waveguides 3222, and at least one beam combiner 3223 includes a first beam combiner 32231 and a second beam combiner 32232. The main difference between this embodiment and the one shown in Figure 12 is that one input end of the first beam combiner 32231 is connected to the first receiving waveguide 32223, and the other input end is connected to a receiving waveguide 3222 adjacent to the first receiving waveguide 32223. Additionally, as the first beam combiner 32231 is connected to the first receiving waveguide 32223, this embodiment can further reduce the quantity of output ports at the final output end of the receiving waveguide module 322, thereby helping to lower the device cost of the LiDAR.

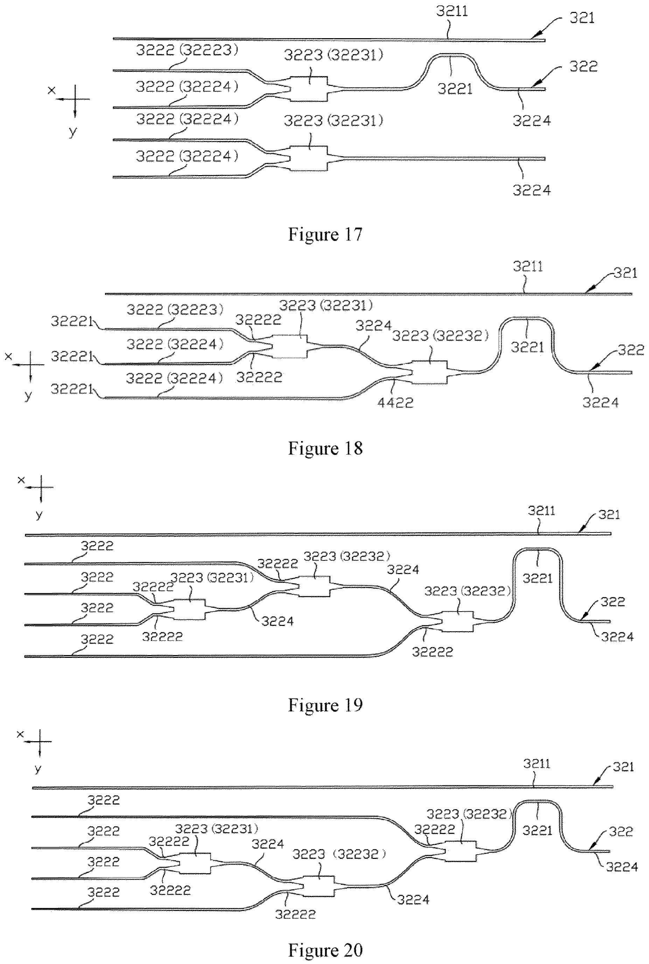

Furthermore, refer to Figure 16. The receiving waveguide module 322 includes two or more receiving waveguides 3222, and at least one beam combiner 3223 includes a first beam combiner 32231. The main difference between this embodiment and the embodiment shown in Figure 14 is that the first receiving waveguide 32223 does not have the aforementioned second coupling region 3221. The second coupling region 3221 is located at the output end of the beam combiner 3223 connected to the first transmission waveguide 3224. Specifically, one input end of the first beam combiner 32231 is connected to the first receiving waveguide 32223, the other input end is connected to the receiving waveguide 3222 adjacent to the first receiving waveguide 32223, and the output end of the first beam combiner 32231 is connected to the first transmission waveguide 3224, which has the aforementioned second coupling region 3221. The second coupling region 3221 is positioned downstream of the first beam combiner 32231, which reduce the quantity of beam combiners 3223 that the echo light passing through the second coupling region 3221 connected to the output end of the beam combiner 3223 needs to go through, thereby reduce the loss of the echo light. With lower optical loss, the coupling efficiency between the emitting waveguide module 321 and the receiving waveguide module 322 can be reduced, get a small coupling ratio to meet the coupling requirements between the emitting waveguide module 321 and the receiving waveguide module 322, ensuring that the energy of the detection optical signal emitted by the emitting waveguide module 321 is relatively high. The quantity of first beam combiners 32231 can be one, or multiple first beam combiners can be set correspondingly when there are more receiving waveguides 3222, as shown in Figure 17. In this case, the first beam combiner closest to the emitting waveguide module is connected to the first receiving waveguide and the second receiving waveguide, while the rest of the first beam combiners are connected to two second receiving waveguides.

For example, refer to Figure 18. The receiving waveguide module 322 includes three or more receiving waveguides 3222, and at least one beam combiner 3223 comprises a first beam combiner 32231 connected in series with at least one second beam combiner 32232. The main difference between this embodiment and the embodiment shown in Figure 15 is that the first receiving waveguide 32223 does not have the aforementioned second coupling region 3221, which is located at the output end of the beam combiner 3223 connected to the first transmission waveguide 3224.

Specifically, one input end of the first beam combiner 32231 is connected to the first receiving waveguide 32223, the other input end is connected to a receiving waveguide 3222 adjacent to the first receiving waveguide 32223, and the output end of the first beam combiner 32231 is connected to the first transmission waveguide 3224. One input end of the second beam combiner 32232 is connected to the upstream beam combiner 3223 via the first transmission waveguide 3224, the other input end is connected to a receiving waveguide 3222, and the output end of the second beam combiner 32232 is connected to the first transmission waveguide 3224. The receiving waveguides 3222 connected to the input ends of each beam combiner 3223 are different, except for the first receiving waveguide 32223, and the receiving waveguides 3222 connected to the adjacent beam combiners 3223 are adjacent. The first transmission waveguide 3224 connected to the output end of the first beam combiner 32231 has the second coupling region 3221, and/or the first transmission waveguide 3224 connected to the output end of the second beam combiner 32232 has the second coupling region 3221. The second coupling region 3221 is located downstream of the first beam combiner 32231, which reduce the quantity of beam combiners 3223 that the echo light passing through the beam combiners 3223 coupled into the receiving waveguide module 322 experiences, thereby reduce the loss of the echo light.

Based on the embodiments described above, when the receiving waveguide module 322 includes a first beam combiner 32231 and at least two second beam combiners 32232, the serial direction of the first beam combiner 32231 and at least two second beam combiners 32232 included in the receiving waveguide module 322 may not be consistent with the arrangement direction of each receiving waveguide 3222. For example, referring to Figures 19 and 20, the at least two second beam combiners 32232 connected to the receiving waveguide 3222 can be positioned along the second direction y on both sides of the receiving waveguide 3222 connected to the first beam combiner 32231. The serial direction of the first beam combiner 32231 and each second beam combiner 32232 is shown as up and then down, or down and then up, rather than consistently downward or upward.

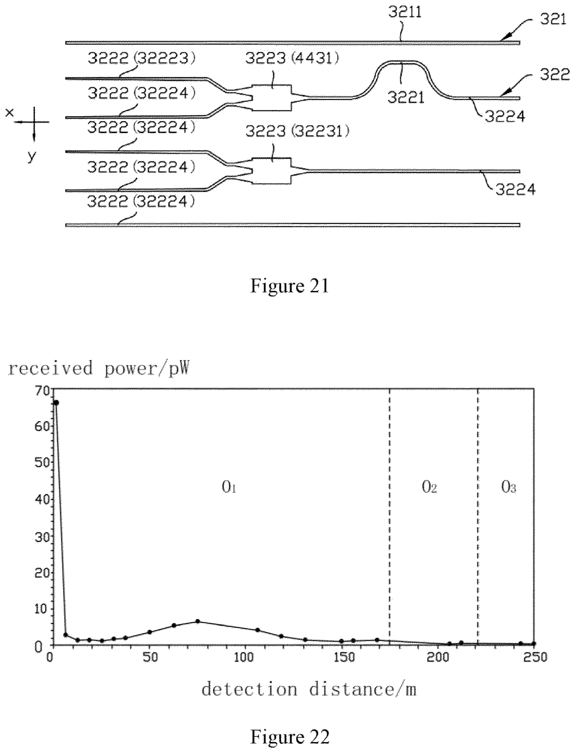

Based on the embodiments described above, when the quantity of receiving waveguides 3222 is at least two more than the quantity of beam combiners 3223, along the second direction y as shown in Figure 21, the receiving waveguides 3222 farthest from the emitting waveguide module 321 are not connected to beam combiners 3223. This arrangement ensures that the echo light corresponding to the farthest detection distance, after being received by the receiving waveguides 3222, can be directly transmitted to the photoelectric detection module without passing through the beam combiners 3223, to ensure that the energy of the echo light reaching the photoelectric detection module meets the requirements.

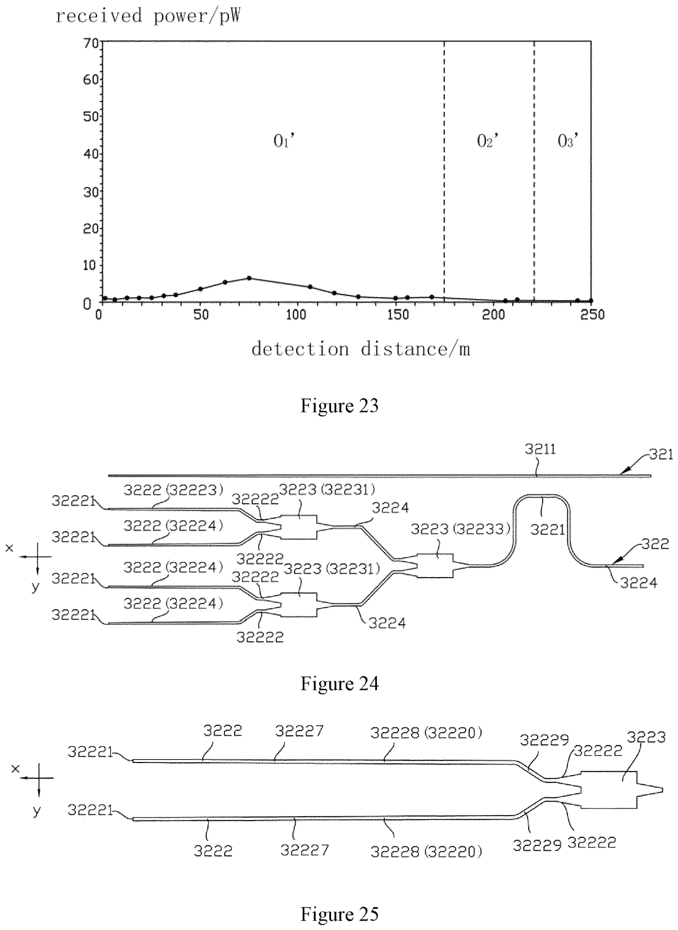

As shown in Figure 21, an explanation is provided for the detection performance of schemes with the first coupling region and the second coupling region set up, as well as schemes without the above-mentioned structures. Specifically, the receiving waveguide module 322 includes five receiving waveguides 3222 and two first beam combiners 32231 as shown in Figure 21, where one input end of a first beam combiner 32231 is connected to the first receiving waveguide 32223, and the other input end is connected to a second receiving waveguide 32224 adjacent to the first receiving waveguide 32223; the two input ends of the other first beam combiner are connected to the second receiving waveguide 32224; along the second direction y, the receiving waveguide 3222 farthest from the emitting waveguide module 321 is not connected to a combiner 3223; among the two first beam combiners 32231, the output end connected to the first transmission waveguide 3224 by the first beam combiner 32231 connected to the first receiving waveguide 32223 has a second coupling region 3221. In this case, when detecting target objects within the range of 0-250m with the LiDAR, the optical power of the echo light output to the rear end by the first transmission waveguide 3224 connected to the output end of the first beam combiner 32231 connected to the first receiving waveguide 32223, the first transmission waveguide 3224 not connected to the first receiving waveguide 32223 by the first beam combiner 32231, and the receiving waveguide 3222 not connected to the combiner 3223 are shown in regions O1, 02, and O3 in Figure 22, respectively. If the receiving waveguide module 322 shown in Figure 21 no longer has the second coupling region 3221, the optical power of the echo light output to the rear end by the first transmission waveguide 3224 connected to the output end of the first beam combiner 32231 connected to the first receiving waveguide 32223, the first transmission waveguide 3224 not connected to the first receiving waveguide 32223 by the first beam combiner 32231, and the receiving waveguide 3222 not connected to the combiner 3223 are shown in regions O1', O2', and O3' in Figure 23, respectively. Shown in Figures 22 and 23 that by setting up the second coupling region 3221 on the receiving waveguide module 322 in an embodiment, the optical power of the echo light received by the LiDAR at close-range target objects can be significantly increased, thereby enhancing the detection performance of the LiDAR at close-range target objects.

Furthermore, the at least one beam combiner 3223 mentioned above may also include at least two first beam combiners 32231 and at least one third beam combiner 32233. Specifically, refer to Figure 24, where the two input ends of the third beam combiner 32233 are respectively connected to a first beam combiner 32231 via a first transmission waveguide 3224, and the output end of the third beam combiner 32233 is connected to a first transmission waveguide 3224. The first receiving waveguide 32223, at least one of the first transmission waveguides 3224 connected to the output end of the first beam combiner 32231 connected to the first receiving waveguide 32223, and the first transmission waveguide 3224 connected to the output end of the third beam combiner 32233 may have a second coupling region 3221. The receiving waveguides 3222 connected to the two first beam combiners 32231 connected to the same third beam combiner 32233 can be adjacent.

The positions of each beam combiner can be set as follows. Along the second direction y, the two input ends of the first beam combiner 32231 can be located between the first ends 32221 of the two connected receiving waveguides 3222, so that the second ends 32222 of the two receiving waveguides 3222 connected to the first beam combiner 32231 can extend towards each other, reduce the size of the receiving waveguide module 322 along the second direction y. Along the second direction y, the two input ends of the second beam combiner 32232 are located on the side of the connected receiving waveguide 3222 facing the first beam combiner 32231, reduce the size of the receiving waveguide module 322 along the second direction y. For example, the two input ends of the second beam combiner 32232 are located between the second ends 32222 of the connected receiving waveguide 3222 and the output end of the upstream combiner 3223. Along the second direction y, the two input ends of the third beam combiner 32233 are located between the two first transmission waveguides 3224 connected to them, allowing the second ends 32222 of the two receiving waveguides 3222 connected to the first beam combiner 32231 to extend towards each other, reducing the size of the receiving waveguide module 322 along the second direction y.

In the embodiments of the present application, the combiner 3223 can be any device capable of combining at least two optical signals before outputting them. For example, the combiner 3223 can be a multi-mode interference (MMI) coupler, a Y-coupler, a star coupler, and so on.

Based on the embodiments described above, the quantity of photoelectric detection units 331 corresponds to the quantity of output ports of the receiving waveguide module 322.

The specific structure of the receiving waveguide is further elaborated below. For example, refer to Figure 25. The receiving waveguide 3222 includes a first connection part 32227, which comprises a first end 32221 and a third end 32228 opposite to the first end 32221. From the first end 32221 to the third end 32228, the cross-sectional profile of the first connection part 32227 gradually expands. That is, the end face size of the first end 32221 for receiving the echo light is small, and the end face size away from the first end 32221 is large. The smaller end face size ensures a larger mode field diameter, enhancing the light receiving tolerance of the receiving waveguide 3222, while the diameter gradually increasing allows for a transition to a size where light can propagate stably.

The cross-sectional profile of the first connection part 32227 gradually expands from the first end 32221 to the third end 32228, which can be, from the first end 32221 to the third end 32228, the width along the second direction y of the first connection part 32227 gradually expands, and so on. The cross-sectional profile of the first connection part 32227 from the first end 32221 to the third end 32228 can smoothly increase with a fixed slope, or it can increase with a varying slope. In an embodiment, the cross-sectional profile of the first connection part 32227 from the first end 32221 to the third end 32228 smoothly increases with a fixed slope, and the first connection part 32227 is generally conical in shape.

The first connecting part 32227 can extend along a straight line direction or a curved line direction. In some embodiments, the first connecting parts 32227 of each input receiving waveguide 3222 extend along a straight line direction, and the extension direction of the first connecting parts 32227 of each input receiving waveguide 3222 is generally parallel. Furthermore, the extension direction of the first connecting parts 32227 of each input receiving waveguide 3222 can be set at an angle with respect to the second direction y. The angle between the extension direction of the first connecting parts 32227 of each input receiving waveguide 3222 and the second direction y can be 75°, 85°, 90°, 95°, and so on.

Referring to Figure 25, the receiving waveguide 3222 also includes a second connection part 32229, the second connection part 32229 comprises opposing fourth end 32220 and second end 32222, the fourth end 32220 is connected to the third end 32228, and from the fourth end 32220 to the second end 32222, the cross-sectional profile of the second connection part 32229 remains constant. The shapes of the first connecting parts 32227 of each input receiving waveguide 3222 are consistent and aligned, thereby ensuring that the mode field diameters of the input receiving waveguides 3222 at the light receiving positions are consistent, and the variation pattern of the mode field diameters of the input receiving waveguides 3222 is consistent. As for the second connection part 32229, due to the introduction of the beam combiner 3223, the ends of each second connection part 32229 away from the first connecting part 32227 are generally not aligned. The second connection part 32229 can be configured to extend along a smooth curved direction to reduce optical losses.

Regarding the spacing L between the first ends 32221 of adjacent receiving waveguides 3222, it can generally be within approximately twice the mode field diameter D of the receiving waveguide 3222, i.e., $L \leq 2D$. Here, the spacing between the first ends 32221 of adjacent receiving waveguides 3222 refers to the distance between the centers of the first ends 32221 of adjacent receiving waveguides 3222. Specifically, the spacing between the first ends 32221 of adjacent receiving waveguides 3222 can be half the width along the second direction y of one receiving waveguide 3222, half the width along the second direction y of the other receiving waveguide 3222, and the gap between the two receiving waveguides 3222 along the second direction y. The mode field diameter of the first ends 32221 of the receiving waveguide 3222 refers to the diameter of the area where the first ends 32221 can receive optical signals, which can be determined by the mode field diameter of light at the first ends 32221 when the light is transmitted from the second ends 32222 to the first ends 32221. Generally, the mode field diameter of the receiving waveguide 3222 is approximately the same as the mode field diameter of the echo optical signal, ensuring a high coupling efficiency when receiving the echo light. The spacing between the first ends 32221 of adjacent receiving waveguides 3222 is approximately within twice the mode field diameter of the receiving waveguide 3222, ensuring that regardless of where the spot of the echo light falls on the receiving waveguide module 322, it can be coupled into at least one receiving waveguide 3222.

Specifically, the mode field diameter of the first end 32221 of the receiving waveguide 3222 is a first diameter D, and the distance between the first ends 32221 of adjacent two receiving waveguides 3222 is a first distance L. The silicon photonic chip 300 can satisfy: $0.6 \leq L/D \leq 2.0$. Optionally, the values of L/D can be 0.6, 0.65, 0.7, 0.8, 0.9, 1.0, 1.1, 1.2, 1.3, 1.4, 1.5, 1.6, 1.7, and so on.

Furthermore, the setting of $L/D \geq 0.6$ can also achieve that the echo light is received by at most two receiving waveguides 3222. That is, the echo light is only received by one receiving waveguide 3222 or the echo light is only received by the two adjacent receiving waveguides 3222, to reduce the difficulty of signal processing, etc.

The spacing between the first ends 32221 of adjacent receiving waveguides 3222 can be simulated and designed based on factors such as detection efficiency. For example, the spacing between the mode fields of the first ends 32221 of the receiving waveguides 3222 can be approximately equal to the diameter of the optical mode field of the corresponding echo light to ensure that the receiving waveguides 3222 have optimal optical coupling efficiency.

Furthermore, to achieve optical coupling between the emitting waveguide module 321 and the receiving waveguide module 322, in addition to bending the second coupling region 3221 towards the emitting waveguide module 321, the first coupling region 3211 of the emitting waveguide module 321 can also be individually bent towards the direction closer to the receiving waveguide module 322 relative to other adjacent parts in the emitting waveguide module 321, so that the first coupling region 3211 and the second coupling region 3221 are configured to allow the optical signal transmitted by the emitting waveguide module 321 to couple. The first coupling region 3211 and the second coupling region 3221 can also be configured as described above simultaneously.

Furthermore, if the echo optical signal received by the emitting waveguide module 321 can be coupled into the receiving waveguide module 322, then when the emitting waveguide module 321 transmits the detection optical signal, there is also a situation where at least part of the detection optical signal transmitted within the emitting waveguide module 321 will be coupled into the receiving waveguide module 322. Therefore, to avoid the mutual coupling between the emitting waveguide module 321 and the receiving waveguide module 322 affecting the optical energy of the detection optical signal output by the emitting waveguide module 321 to the silicon photonic chip 300, the coupling between the emitting waveguide module 321 and the receiving waveguide module 322 can be weakly coupled. This ensures that the coupling ratio between the emitting waveguide module 321 and the receiving waveguide module 322 satisfies: the detection optical signal output by the emitting waveguide module 321 has sufficient optical energy to meet the detection requirements, and the echo light coupled into the receiving waveguide module 322 by the emitting waveguide module 321 meets the signal processing requirements.

Specifically, the coupling ratio $\alpha$ between the emitting waveguide module 321 and the receiving waveguide module 322, wherein $\alpha$ can be flexibly adjusted. For example, $\alpha$ can be greater than or equal to 0.1% and less than or equal to 1%. Specifically, the above coupling ratio $\alpha$ can be such as 0.1%, 0.3%, 0.6%, 0.8%, 1%. For instance, if the coupling ratio $\alpha$ between the emitting waveguide module 321 and the receiving waveguide module 322 is 1%, then only 1% of the optical signal transmitted within the emitting waveguide module 321 can couple into the receiving waveguide module 322.

The above is a detailed description of the receiving waveguide module 322. Next, an explanation is provided for the construction of the emitting waveguide module 321 in the embodiments of the present application. The implementation of the emitting waveguide module 321 is also diverse, as it can use either a single waveguide to emit detection light or multiple waveguides for emitting detection light.

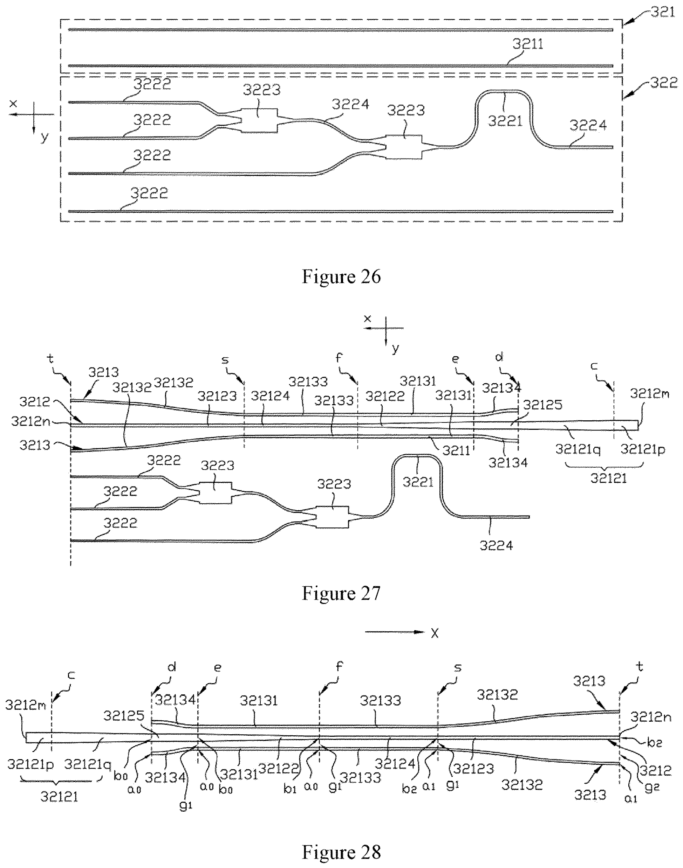

Refer to Figure 26, if the emitting waveguide module 321 includes at least two emitting waveguides, among the at least two emitting waveguides, the emitting waveguide closest to the receiving waveguide module 322 has the aforementioned first coupling region 3211.

Refer to Figure 27, where at least two emitting waveguides include a first emitting waveguide 3212 and at least one second emitting waveguide 3213. The first emitting waveguide 3212 has an incident end 3212m and an emitting end 3212n arranged opposite to each other along the extending direction for receiving the detection optical signal. Along the thickness direction z, the second emitting waveguide 3213 is arranged opposite to the first emitting waveguide 3212 along the second direction y. The first emitting waveguide 3212 and the second emitting waveguide 3213 are configured to couple the detection light in the first emitting waveguide 3212 into the second emitting waveguide 3213 so that the emitting waveguide module 321 outputs the detection light through at least two emitting waveguides. In an embodiment, the emitting waveguide module 321 can achieve single-waveguide input and multi-waveguide output. The silicon photonic chip 300 may directly receive the detection optical signal output by the light source module through the first emitting waveguide 3212, where the first emitting waveguide 3212 is a separate waveguide structure, and the incident end 3212m is located at the end of the single waveguide structure. Alternatively, the optical chip may indirectly receive the detection light output by the light source module through the first emitting waveguide 3212, for example, if the upstream of the first emitting waveguide 3212 is connected to other waveguide structures, indicating that the emitting waveguide is part of the entire waveguide structure.

The second transmitting waveguide 3213 can be arranged opposite to the first transmitting waveguide 3212 as follows: the extension direction of the second transmitting waveguide 3213 is generally the same as that of the first transmitting waveguide 3212, and both are arranged opposite to each other in a direction roughly perpendicular to the extension direction of the first transmitting waveguide 3212 (the aforementioned second direction y).

The emitting waveguide module 321 is configured to output detection light through at least two emitting waveguides, which can be, the emitting waveguide module 321 is configured to jointly output a detection light signal through the first emitting waveguide 3212 and the second emitting waveguide 3213, or the emitting waveguide module 321 is configured to jointly output a detection light signal through two or more second emitting waveguides 3213.

In an embodiment, the emitting waveguide module 321 is configured to illustrate an example where a detection optical signal is output through both the first emitting waveguide 3212 and the second emitting waveguide 3213. The quantity of second emitting waveguides 3213 can be one, two, three, and so on. If the detection optical signal is output by one first emitting waveguide 3212 and two or more second emitting waveguides 3213, the two or more second emitting waveguides 3213 can be distributed in a circular array around the extension direction of the first emitting waveguide 3212 at the periphery of the first emitting waveguide 3212, hence the detection light transmitted by the first emitting waveguide 3212 to be more smoothly coupled into the peripheral second emitting waveguides 3213.

The above two or more emitting waveguides can include a first emitting waveguide 3212 and at least one second emitting waveguide 3213. Refer to Figures 27 and 28, the first emitting waveguide 3212 comprises a first input part 32121 and a first coupling part 32122. Along the illustrated direction x, the first input part 32121 is located upstream of the first coupling part 32122 and extends beyond the second emitting waveguide 3213. The end of the first input part 32121 away from the first coupling part 32122 is the mentioned incident end 3212m, which is used to receive the detection light via the incident end 3212m so that the detection light enters the first emitting waveguide 3212 and propagates along it. The "first direction x" as described in this application refers to the direction determined by the extension of the first emitting waveguide 3212 from the incident end 3212m to the emitting end 3212n.

Along the above-mentioned first direction x, the first coupling region 32122 is located downstream of the first input part 32121 to transmit the detection optical signal entering the first transmission waveguide 3212 through the first input part 32121. Correspondingly, the second transmission waveguide 3213 includes a second coupling region 32131, along the thickness direction z, the second coupling region 32131 is arranged opposite the first coupling region 32122 along the second direction y, and the first coupling region 32122 and the second coupling region 32131 are configured to let the detection light in the first coupling region 32122 to couple into the second coupling region 32131. In an embodiment, along the first direction x, the cross-sectional profile of the first coupling region 32122 gradually contracts, for example, the width of the first coupling region 32122 decreases gradually; the cross-sectional profile of the second coupling region 32131 remains constant. Thus, the first coupling region 32122 and the second coupling region 32131 together form a module capable of achieving optical coupling, during the transmission of light in the first coupling region 32122 along the first direction x, the light will spill over to the second coupling region 32131. By restricting the cross-sectional profile of the first coupling region 32122 along the first direction x, the detection light inside the first coupling region 32122 can spill over, and the spilled detection light can enter the second transmission waveguide 3213, thereby achieving the output of detection light from multiple transmission waveguides. As the detection light is transmitted from originally one transmission waveguide to being transmitted by the first transmission waveguide 3212 and the second transmission waveguide 3213, the mode field size of the detection light will increase; and according to the approximate relationship between the divergence angle $\theta$ and the mode field radius $\omega 0$ of the beam emitted, as roughly satisfied by the formula (1), the increase in the mode field of the detection light can reduce the divergence angle of the emitted beam, thereby improving the resolution during laser radar detection.

$$\theta = \lambda/(\pi\omega 0) \qquad\qquad (1)$$

Where:

$\theta$ represents the divergence angle of the light beam emitted by the emitting waveguide module;
$\lambda$ represents the wavelength of the light beam;
$\omega 0$ represents the minimum spot size of the light beam at the emitting end of the emitting waveguide module.

In some embodiments, along the direction perpendicular to the silicon photonic chip 300, along the aforementioned first direction x, the width of the first coupling region 32122 can gradually decrease from b0 to b1, where b0 > b1, $0.5 \ \mu m \leq b0 \leq 1.2 \ \mu m$, and $0.2 \ \mu m \leq b1 \leq 0.9 \ \mu m$. Along the first direction x, the width of the second coupling region 32131 remains constant; specifically, the width of the second coupling region 32131 can be a0 along the first direction x, where 0.1 $\mu$m $\leq$ a0 $\leq$ 0.4 $\mu$m.

Regarding the spacing between the first coupling region 32122 and the second coupling region 32131 along the first direction x, the spacing can remain constant. Specifically, along the first direction x, the spacing between the first coupling region 32122 and the second coupling region 32131 can be maintained at g1, where 0.2$\mu$m $\leq$ g1 $\leq$ 1.2$\mu$m; to meet manufacturing process requirements on the one hand and enable optical coupling effects between the first coupling region 32122 and the second coupling region 32131 on the other hand. The spacing between the first coupling region 32122 and the second coupling region 32131 as described in this application refers to the distance between the centerlines of the first coupling region 32122 and the second coupling region 32131. In this application, the centerline of a component is defined such that the extension direction of the centerline is consistent with the extension direction of the component, and the width on both sides of the component with respect to this centerline is the same.

Refer to Figure 27. A second emitting waveguide 3213 located between the first transmitting waveguide 3212 and the receiving waveguide module 322 has a first coupling region 3211. The second emitting waveguide 3213 has the first coupling region 3211 at the second coupling part 32131 of the second emitting waveguide 3213.

In an embodiment, the first emitting waveguide 3212 also includes a first output part 32123, along the first direction x, the first output part 32123 is located downstream of the first coupling part 32122; the second emitting waveguide 3213 also includes a second output part 32132 set opposite to the first output part 32123, along the first direction x, the second output part 32132 is located downstream of the second coupling part 32131. The emitting waveguide module 321 is configured to output the detection light through the first output part 32123 and the second output part 32132. In this embodiment, the emitting waveguide module 321 includes a first emitting waveguide 3212 and two second emitting waveguides 3213, with the two second emitting waveguides 3213 located on opposite sides of the first emitting waveguide 3212, and the detection light signal is output by one first emitting waveguide 3212 and two second emitting waveguides 3213. Optionally, the two second emitting waveguides 3213 can be positioned on opposite sides of the first emitting waveguide 3212 along the width direction of the first emitting waveguide 3212 to reduce the divergence angle of the emitted beam of the emitting waveguide module 321 along the width direction of the first emitting waveguide 3212; in other embodiments, the orientation of the arrangement between the emitting waveguides may not necessarily align with the width direction of the first emitting waveguide 3212. Furthermore, as long as the detection light is output through the first emitting waveguide 3212 and the second emitting waveguides 3213 together; for example, in other embodiments of the present application, the emitting waveguide module 321 can also output detection light through the first coupling part 32122 and the second coupling part 32131.

Optionally, along the first direction x, the width of the first output part 32123 can remain constant; along the first direction x, the width of the second output part 32132 can remain constant. For example, along the first direction x, the width of the first output part 32123 remains at b2, and the width of the second output part 32132 remains at a1, where 0.1$\mu$m $\leq$ b2 $\leq$ 0.35$\mu$m, and 0.1$\mu$m $\leq$ a1 $\leq$ 0.35$\mu$m.

Regarding the spacing between the second output part 32132 and the first output part 32123 along the first direction x, the spacing can gradually increase to further expand the mode field size of the emitted detection light, thereby reducing the divergence angle of the detection light after emission, and improving the resolution during laser radar detection. The spacing between the second output part 32132 and the first output part 32123 along the first direction x can smoothly increase at a fixed slope or increase with a changing slope. In some embodiments, along the first direction x, the rate of change in spacing between the second output part 32132 and the first output part 32123 gradually increases, decreases, and then increases again. Specifically, along the first direction x, the spacing between the second output part 32132 and the first output part 32123 first slightly increases, then significantly increases, and finally slightly increases again to ensure a smooth connection between the first output part 32123 and its upstream part. This ensures the expansion of the mode field of the emitted beam while reducing the loss of detection light, and maintains the alignment of the transmission direction of the detection light signal output through the first output part 32123 with the transmission direction of the detection light signal output through the second output part 32132. Additionally, it ensures a gradual change in the overall extension shape of the first output part 32123. The spacing between the second output part 32132 and the first output part 32123 as described in this application refers to the distance between the centerlines of the second output part 32132 and the first output part 32123.

In some embodiments, along the first direction x, the spacing between the second output part 32132 and the first output part 32123 gradually changes from g1 to g2, where g2 > g1, and 1$\mu$m $\leq$ g2 $\leq$ 3$\mu$m.

Optionally, if the emitting waveguide module 321 includes two or more second emitting waveguides 3213, along the first direction x, the variation pattern of the spacing between the second output parts 32132 of each second emitting waveguide 3213 and the first output parts 32123 can be consistent, so that the amount of detection light within each second emitting waveguide 3213 can be relatively balanced, thereby reducing the intensity differences of various parts of the spot formed by the emitted light beam, and enhancing the detection performance of the LiDAR. Specifically, the second output parts 32132 can be arranged in a circular array around the periphery of the first output part 32123, and the shapes of each second output part 32132 can be similar.

In an embodiment, the first emitting waveguide 3212 may also include a first transmission section 32124. Along the first direction x, the first transmission section 32124 is connected to the first coupling section 32122 and located downstream of the first coupling section 32122. The second emitting waveguide 3213 may also include a second transmission section 32133 set opposite to the first transmission section 32124. Along the first direction x, the second transmission section 32133 is connected to the second coupling section 32131 and located downstream of the second coupling section 32131. Along the aforementioned first direction x, the cross-sectional profile of the first transmission section 32124 gradually contracts, and the cross-sectional profile of the second transmission section 32133 gradually contracts. This configuration aims to further increase the mode field size of the detection light by narrowing the widths of the transmission sections of each emitting waveguide. When the detection light signal passes through the first coupling section 32122, a portion of the light signal couples into the second coupling section 32131, preliminarily enlarging the mode field size of the detection light signal. As the detection light signal passes through the first transmission section 32124 and the second transmission section 32133, the mode field size of the detection light further increases. When the detection light signal passes through the first output section 32123 and the second output section 32132, the mode field size of the detection light signal further increases. The mode field size of the detection light signal undergoes threefold growth, ensuring a larger mode field size at the time of emission to guarantee a smaller divergence angle at the emission.

Along the first direction x, the width of the first transmission part 32124 can smoothly decrease at a fixed rate or with a decreasing slope. Similarly, along the first direction x, the width of the second transmission part 32133 can smoothly decrease at a fixed slope or with a decreasing slope. Optionally, along the first direction x, the width variation pattern of the first transmission part 32124 can be similar to that of the second transmission part 32133. For example, in some embodiments, along the first direction x, the width of the first transmission part 32124 can gradually decrease from b1 to b2; along the first direction x, the width of the second transmission part 32133 can gradually decrease from a0 to a1, where a1 matches the width at one end connected to the second output part 32132. In an embodiment, the first coupling part 32122 is indirectly connected to the first output part 32123 through the width-varying first transmission part 32124, hence b2 is less than b1; in other embodiments of this application, if the first coupling part 32122 is directly connected to the first output part 32123, then b2 can be equal to b1. In an embodiment, the second coupling part 32131 is indirectly connected to the second output part 32132 through the width-varying second transmission part 32133, hence a1 is less than a0; in other embodiments of this application, if the second coupling part 32131 is directly connected to the second output part 32132, then a1 can be equal to a0.

Regarding the spacing between the first transmission section 32124 and the second transmission section 32133, it can be such that along the aforementioned first direction x, the spacing between the first transmission section 32124 and the second transmission section 32133 remains constant. Specifically, along the first direction x, the spacing between the first transmission section 32124 and the second transmission section 32133 can be maintained at g1. The spacing between the first transmission section 32124 and the second transmission section 32133 as described in this application refers to the distance between the centerlines of the first transmission section 32124 and the second transmission section 32133.

In an embodiment, the first emitting waveguide 3212 also includes a third coupling region 32125; along the first direction x, the third coupling region 32125 is connected to the first coupling region 32122 and is located upstream of the first coupling region 32122. Correspondingly, the second emitting waveguide 3213 also includes a fourth coupling region 32134 arranged opposite to the third coupling region 32125; along the first direction x, the fourth coupling region 32134 is connected to the second coupling region and is located upstream of the second coupling region 32131; the third coupling region 32125 and the fourth coupling region 32134 are configured to make the detection light in the third coupling region 32125 to couple into the fourth coupling region 32134. In an embodiment, along the aforementioned first direction x, the spacing between the fourth coupling region 32134 and the third coupling region 32125 gradually decreases. For example, along the first direction x, the spacing from the third coupling region 32125 to the fourth coupling region 32134 can gradually decrease to g1. The setting of gradually reducing the spacing between the third coupling region 32125 and the fourth coupling region 32134 aims to allow the detection light to initially couple at the third coupling region 32125 and the fourth coupling region 32134, overcoming the higher coupling loss that would occur if coupling started directly at the first coupling region 32122 and the second coupling region 32131.

Optionally, along the above-mentioned first direction x, the width of the third coupling region 32125 can remain constant. For example, along the first direction x, the width of the third coupling region 32125 can be maintained at b0. Along the first direction x, the width of the fourth coupling region 32134 remains constant. For instance, along the first direction x, the width of the fourth coupling region 32134 can be kept at a0. Wherein, the width of the fourth coupling region 32134 can be smaller than the minimum width of the third coupling region 32125.

Regarding the variation of the spacing between the third coupling region 32125 and the fourth coupling region 32134 along the aforementioned first direction x, it can smoothly decrease at a fixed rate or decrease at a changing rate. In the embodiments of the present application, along the aforementioned first direction x, the rate of change in spacing between the third coupling region 32125 and the fourth coupling region 32134 first decreases slightly, then decreases significantly, and then decreases slightly again. For a gentle approach between the first emitting waveguide 3212 and the second emitting waveguide 3213 along the first direction x, enhancing the coupling efficiency between the first emitting waveguide 3212 and the second emitting waveguide 3213.

Furthermore, in an embodiment, the above-mentioned first input part 32121 includes interconnected first portion 32121p and second portion 32121q. Along the first direction x, the first portion 32121p has the aforementioned incident end 3212m, which receives the detection light generated by the light source module through this incident end 3212m. The second portion 32121q is connected to one end of the first portion 32121p away from the incident end 3212m and is located upstream of the first coupling part 32122, which is used to transmit the detection light to the third coupling part 32125 and the first coupling part 32122. The width of the first portion 32121p can remain constant, while the width of the second portion 32121q can gradually decrease; for example, the width of the second portion 32121q can gradually decrease until its width at the end away from the first portion 32121p is b0. This configuration make the width of the first input part 32121 to change to match the downstream waveguide structure after receiving the detection light signal, to transmit the detection light signal to the downstream waveguide structure; for example, the silicon photonic chip 300 further includes a waveguide structure located upstream of the first input part 32121, where the width of the first portion 32121p matches the width of the upstream waveguide structure, and the width of the second portion 32121q away from the first portion 32121p matches the downstream waveguide structure, allowing the first input part 32121 to efficiently couple the detection light into the downstream waveguide structure with low loss.

For the first transmitting waveguide 3212, it can extend along a straight line direction, make the second transmitting waveguide 3213 to adjust the spacing between the second transmitting waveguide 3213 and the first transmitting waveguide 3212 through changes such as bending relative to the first transmitting waveguide 3212, hence reduce the design complexity of the transmitting waveguide module 321 and improve production efficiency.

The above describes the structure of the emitting waveguide module 321 in some embodiments. Taking the emitting waveguide module 321 as an example, which includes a first emitting waveguide 3212 and two second emitting waveguides 3213 located on both sides of the first emitting waveguide 3212, and in conjunction with Figures 28 to 34, an explanation is provided regarding the divergence of the detection light output by the silicon photonic chip 300 in this embodiment.

As described above, the first emitting waveguide 3212 may include sequentially connected first input part 32121, third coupling part 32125, first coupling part 32122, first transmission part 32124, and first output part 32123 along the first direction x, and the second emitting waveguide 3213 may include sequentially connected fourth coupling part 32134, second coupling part 32131, second transmission part 32133, and second output part 32132 along the first direction x. The interface between the first portion 32121p and the second portion 32121q is denoted as the first interface c, the interface between the second portion 32121q and the third coupling part 32125 is denoted as the second interface d, the interface between the third coupling part 32125 and the first coupling part 32122 is denoted as the third interface e, the interface between the first coupling part 32122 and the first transmission part 32124 is denoted as the fourth interface f, the interface between the first transmission part 32124 and the first output part 32123 is denoted as the fifth interface s, and the exit end face of the first output part 32123 is denoted as the sixth interface t. The end face of the fourth coupling part 32134 facing away from the second coupling part 32131 can be coplanar with the second interface d, the interface between the fourth coupling part 32134 and the second coupling part 32131 can be coplanar with the third interface e, the interface between the second coupling part 32131 and the second transmission part 32133 can be coplanar with the fourth interface f, the interface between the second transmission part 32133 and the second output part 32132 can be coplanar with the fifth interface s, and the exit end face of the second output part 32132 can be coplanar with the sixth interface t.

Optionally, the first interface c, the second interface d, the third interface e, the fourth interface f, the fifth interface s, and the sixth interface t can be parallel to each other or intersect.

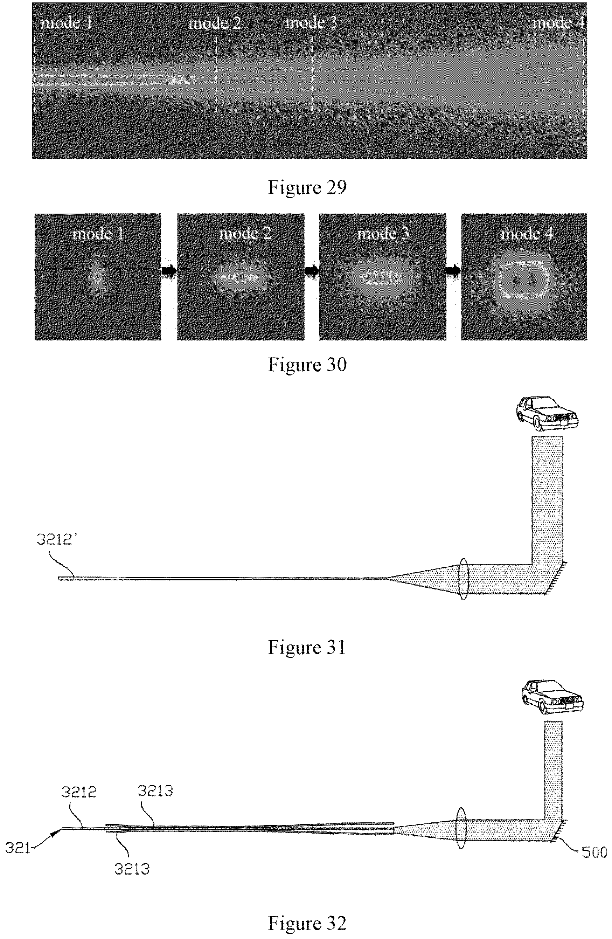

Figure 29 shows a grayscale image of the optical field propagation of the emitting waveguide module 321 when transmitting the detection optical signal, and Figure 30 shows a grayscale image of the mode evolution of the emitting waveguide module 321 when transmitting the detection optical signal. In these figures, the mode at the first interface c is referred to as mode 1, the mode at the fourth interface f is referred to as mode 2, the mode at the fifth interface s is referred to as mode 3, and the mode at the sixth interface t is referred to as mode 4. From Figures 29 and 30, it can be observed that mode 1 at the first interface c is the fundamental mode, mode 2 at the fourth interface f and mode 3 at the fifth interface s have gradually evolved into the fundamental modes of the composite waveguide, with the mode field size of mode 2 intersecting with mode 1 increasing, the mode field size of mode 3 further increasing compared to mode 2, and the mode field size of mode 4 at the sixth interface t further increasing compared to mode 3. Therefore, the mode field size at the final emission of the detection light by the emitting waveguide module 321 is significantly larger than the mode field size when initially receiving the detection light. Based on the relationship between the divergence angle and the mode field size mentioned above, the increase in the mode field size is beneficial for reducing the divergence angle of the emitted beam, thereby enhancing the resolution during laser radar detection.

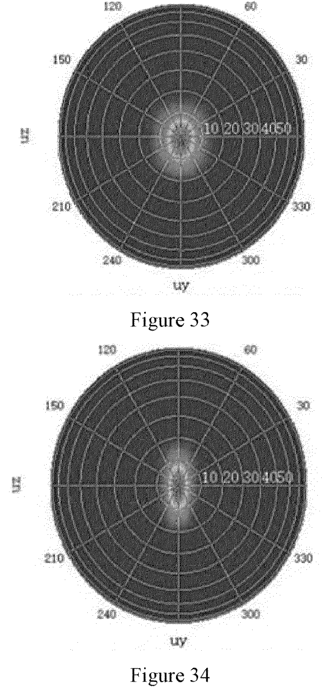

Furthermore, refer to Figures 31 and 32. Figure 31 illustrates the beam transmission schematic when using a single emitting waveguide (i.e., only using the first emitting waveguide 3212') in the single-input single-output scenario. Figure 32 illustrates the beam transmission schematic when using the emitting waveguide module 321 in this embodiment for single waveguide input and multiple waveguide outputs. In Figure 32, the first emitting waveguide used for detection light input in the emitting waveguide module 321 shown is of basically the same width as the single emitting waveguide shown in Figure 31. Moreover, when the same fundamental mode energy is injected, the far-field spot of the emitted beam corresponding to the single emitting waveguide shown in Figure 31 falling on the target object (such as a car, pedestrian, or calibration target) is shown in Figure 33, while the spot of the emitted beam corresponding to the emitting waveguide module 321 shown in Figure 32 falling on the target object is shown in Figure 34. From Figure 33 and Figure 34 shown that the emitting waveguide module 321 in embodiments, with single waveguide input and multiple waveguide outputs, compared to the single-input single-output of the single emitting waveguide, results in a smaller far-field spot size of the emitted beam. This indicates that the emitting waveguide module 321 provided in this application example outputs detection light with a smaller divergence angle, which is beneficial for improving the resolution during LiDAR detection.

Refer to Figure 32, the scanning module 500 is located downstream of the emitting waveguide module 321. It is used to receive the detection light emitted from the silicon photonic chip 300 and perform one-dimensional or two-dimensional deflection to create a detection field outside the LiDAR. Due to the reduced divergence angle of the emitted beam from the emitting waveguide module 321, the spot size of the emitted beam reaching the scanning module 500 can be reduced. This allows for the use of a small-sized scanning module 500 to meet the requirements, facilitating miniaturization and integration of the LiDAR. The scanning module 500 can be a mirror and/or prism, and so on.

If the emitting waveguide module 321 comprises two or more second emitting waveguides 3213, the two or more second emitting waveguides 3213 can be arranged at intervals along the extension direction of the first emitting waveguide 3212 at the periphery of the first emitting waveguide 3212, so that the detection light transmitted by the first coupling region 32122 of the first emitting waveguide 3212 can be coupled into the second coupling region 32131 of the peripheral second emitting waveguides 3213.

The structure of the above-mentioned emitting waveguide module 321 can be adjusted according to the divergence angle. For example, the quantity of emitting waveguides included in the emitting waveguide module 321 and the spacing between the second emitting waveguide 3213 and the first emitting waveguide 3212 can be adjusted based on the desired divergence angle. Specifically, with the spacing between the second emitting waveguide 3213 and the first emitting waveguide 3212 remaining constant, the quantity of emitting waveguides included in the emitting waveguide module 321 can be increased to reduce the divergence angle of the emitted beam from the emitting waveguide module 321. Similarly, with the quantity of emitting waveguides included in the emitting waveguide module 321 remaining constant, the spacing between the second emitting waveguide 3213 and the first emitting waveguide 3212 can be increased to reduce the divergence angle of the emitted beam from the emitting waveguide module 321.

An anti-reflection coating can be deposited on the exit end face of the emitting waveguide module 321 to reduce the reflectance at the exit end face, thereby improving the efficiency of beam emission.

In an embodiment, the first emitting waveguide 3212 includes a first input part 32121, a third coupling part 32125, a first coupling part 32122, a first transmission part 32124, and a first output part 32123. In some cases, one or more of the above-mentioned first input part 32121, third coupling part 32125, first transmission part 32124, and first output part 32123 can be omitted. Similarly, in the second emitting waveguide 3213, one or more of the fourth coupling part 32134, second transmission part 32133, and second output part 32132 can be omitted. For example, in some embodiments, the emitting waveguide module 321 can receive the detection light via the first coupling part 32122 and output the detection light via the first coupling part 32122 and the second coupling part 32131.

In summary, the embodiments of the present application utilize a method where a single emitting waveguide inputs the detection light and multiple emitting waveguides output the detection light. This approach make the mode field size of the detection light emitted by the emitting waveguide module 321 to be larger, thereby reducing the divergence angle of the emitted detection light, helps to decrease the spot size of the detection light on the target object, thereby enhancing the detection resolution.

Furthermore, the example provided above where one end of the receiving waveguide module 322 that receives the echo optical signal and one end of the emitting waveguide module 321 that emits the echo optical signal, are located at the same end of the silicon photonic chip 300 is for illustration purposes. In other embodiments, the above-mentioned one end of the receiving waveguide module 322 that receives the echo optical signal and one end of the emitting waveguide module 321 that emits the echo optical signal can also be located at different ends of the silicon photonic chip 300. Additional optical components are needed to separate and guide the emission path and the echo path.

Regarding the above-mentioned emitting waveguide module 321, the above embodiment is explained using the example where the emitting waveguide module 321 outputs detection light through both the first emitting waveguide 3212 and the second emitting waveguide 3213. As long as it is ensured that the emitting waveguide module 321 receives detection light through the first emitting waveguide 3212 and outputs a beam of detection light through at least two emitting waveguides.

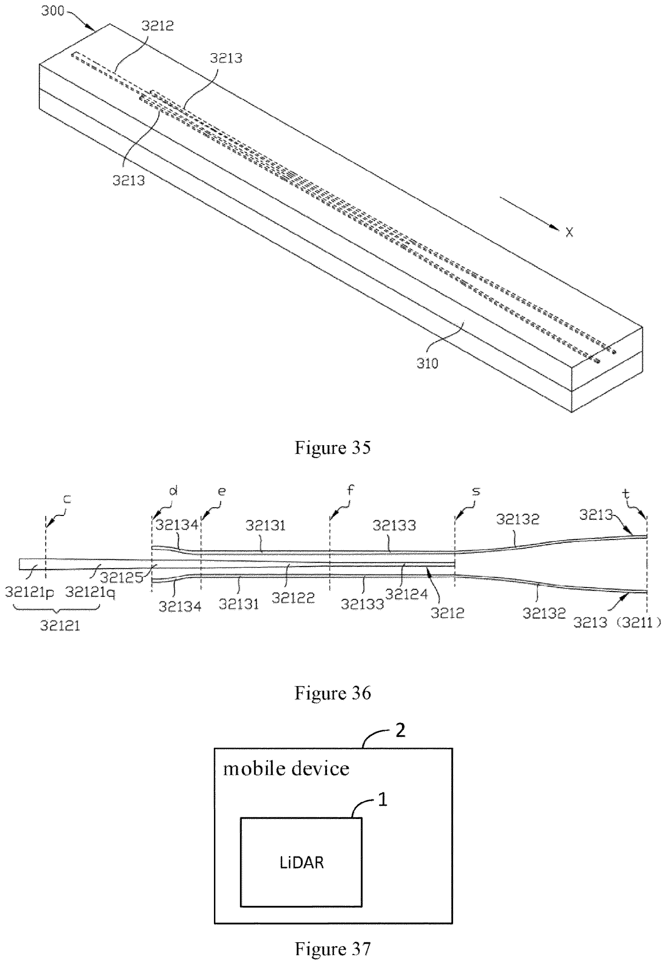

For example, Figures 35 and 36 show a schematic diagram of the emitting waveguide module 321 provided in another embodiment. The emitting waveguide module 321 outputs detection light through at least two emitting waveguides, specifically, the emitting waveguide module 321 outputs detection light through at least two second emitting waveguides 3213. In contrast to the embodiment shown in Figure 28 where the emitting waveguide module 321 outputs detection light through the first emitting waveguide 3212 and the second emitting waveguide 3213, in this embodiment, the first emitting waveguide 3212 no longer outputs detection light.

The structure of the emitting waveguide module 321 in this embodiment is generally similar to that of the emitting waveguide module 321 in the embodiment shown in Figure 28, with the difference being that the first emitting waveguide 3212 in this embodiment no longer includes the first output part 32123 as shown in the embodiment of Figure 28. Therefore, along the aforementioned first direction x, the second output parts 32132 of each second emitting waveguide 3213 extend beyond the first emitting waveguide 3212; thus, the emitting waveguide module 321 can output the detection light through the second output parts 32132 of each second emitting waveguide 3213.

Similar to the emitting waveguide module 321 in the above embodiment, the emitting waveguide module 321 in this embodiment can also increase the mode field size when the detection light is emitted, thereby reducing the divergence angle of the detection light to improve the resolution of LiDAR detection.

This application also provides a mobile device, which includes the LiDAR provided in any of the embodiments described above. The mobile device can be a car, drone, robot, or any device equipped with a LiDAR.

As the inclusion of the above LiDAR, the integration level of the mobile device is also higher.

In the description of this application, terms such as "first," "second," etc., are used for descriptive purposes only and should not be construed as indicating or implying relative importance. For a person skilled in the art, the meanings of these terms in this application can be understood based on the context. Additionally, in the description of this application, unless otherwise specified, "multiple" means at least two, for example, two, three, four, and so on. "And/or" describes the relationship between associated objects, indicating that there can be three possibilities, for example, A and/or B can mean: only A exists, both A and B exist, or only B exists. The character "/" generally signifies an "or" relationship between the preceding and subsequent associated objects.

The above disclosure is merely exemplary embodiments of the present application and should not be used to limit the scope of the present application. Therefore, equivalent changes made in accordance with the claims of the present application are still within the scope covered by the present application.

**Claims**

1. A LiDAR, wherein the LiDAR is an FMCW LiDAR and comprises:

   a light source module, configured to generate a first light beam;
   a light amplification module, configured to receive and amplify the first light beam to output an amplified first light beam; and
   a silicon photonic chip, configured to receive the amplified first light beam through spatial optical coupling and comprising:

   a cladding,
   a transceiving waveguide module, embedded in the cladding and comprising an emitting waveguide module and a receiving waveguide module, wherein the emitting waveguide module is configured to receive a detection optical signal and emit the detection optical signal out of the silicon photonic chip to detect a target object, the detection optical signal being at least a part of the first light beam, and the receiving waveguide module is configured to receive an echo optical signal formed by the target object reflecting the detection optical signal, and
   a photoelectric detection module, configured to receive a local oscillator light signal and the echo optical signal output by the receiving waveguide module.

2. The LiDAR according to claim 1, wherein:

   the light source module comprises a light source unit configured to generate a source light signal, and a first light beam splitting module configured to receive the source light signal and split the source light signal into two first light beams;
   the LiDAR comprises two or more light amplification modules, each light amplification module configured to receive one first light beam and output an amplified first light beam, and
   the silicon photonic chip comprises two or more transceiving waveguide modules and two or more photoelectric detection modules, and the transceiving waveguide modules, the photoelectric detection modules, and the light amplification modules are in one-to-one correspondence.

3. The LiDAR according to claim 2, wherein the first light beam splitting module comprises two or more beam splitters, the two or more beam splitters comprising one or more first beam splitter and a second beam splitter arranged in sequence along a preset direction, wherein:

the first beam splitter is configured to receive an upstream optical signal, and split the upstream optical signal into the first light beam that is emitted to the light amplification module and a first split light beam that is emitted to the second beam splitter, and
the second beam splitter is configured to receive the first split light beam that is output by an adjacent first beam splitter, and reflect the first split light beam to form the first light beam that is emitted to the light amplification module.

4. The LiDAR according to claim 2, wherein the first light beam splitting module comprises a planar lightwave circuit, the planar lightwave circuit comprising:

a third beam splitter, configured to receive the source light signal generated by the light source unit, and split the source light signal into at least two first light beams,
a second mode converter, located upstream of the third beam splitter and configured to receive the source light signal and transmit the source light signal to the third beam splitter, and
a third mode converter, located downstream of the third beam splitter and configured to receive the first light beams and transmit the first light beams out of the planar lightwave circuit.

5. The LiDAR according to claim 1, wherein:

the silicon photonic chip further comprises a first beam splitting module, the first beam splitting module is in one-to-one correspondence with the light amplification module and is configured to receive the first light beam that is output by the light amplification module and split the first light beam into the local oscillator light signal and the detection optical signal,
the emitting waveguide module is connected to the first beam splitting module to receive the detection optical signal, and
the photoelectric detection module is connected to the first beam splitting module to receive the local oscillator light signal.

6. The LiDAR according to claim 5, wherein:

the silicon photonic chip further comprises a nonlinear calibration module,
one of the first beam splitting modules is configured to receive the first light beam that is output by the light amplification module, and split the first light beam into the local oscillator light signal, the detection optical signal, and a nonlinear calibration signal, and
the nonlinear calibration module comprises a second beam splitter, an optical delay line, and an photoelectric detection component, wherein the second beam splitter is configured to receive the nonlinear calibration signal and split the nonlinear calibration signal into a first calibration signal and a second calibration signal; and at least one input end of the photoelectric detection component is connected to an output end of the second beam splitter via the optical delay line, so that the photoelectric detection component receives the first calibration signal and the second calibration signal with different optical path lengths.

7. The LiDAR according to claim 1, wherein the photoelectric detection module comprises a first optical mixer and a first balanced photodetector, wherein:

the first optical mixer is configured to receive the local oscillator light signal and the echo optical signal, and generate a first beat frequency optical signal and a second beat frequency optical signal, and
the first balanced photodetector is configured to receive the first beat frequency optical signal and the second beat frequency optical signal, to perform balance detection on the first beat frequency optical signal and the second beat frequency optical signal.

8. The LiDAR according to claim 1, further comprising:

a first lens module, wherein each first lens module corresponds to one of the light amplification modules and comprises a first lens, the first lens located upstream of the light amplification module and configured to focus the first light beam and output the first light beam to the light amplification module, and

a second lens module, wherein each second lens module corresponds to one of the light amplification modules and comprises a second lens, the second lens located between the light amplification module and the silicon photonic chip and configured to focus the first light beam and output the first light beam to the silicon photonic chip.

9. The LiDAR according to claim 8, wherein the second lens module comprises two or more second lenses arranged at intervals along a light axis direction of the second lenses in the second lens module.

10. The LiDAR according to claim 2, wherein the light source module is further configured to generate a second light beam, wherein:

the light source module further comprises a second light beam splitting module located between the light source unit and the first light beam splitting module, the second light beam splitting module configured to receive the source light signal and split the source light signal into a second light beam that is emitted to the silicon photonic chip and a second split light beam that is emitted to the first light beam splitting module,

the first light beam splitting module is configured to receive the second split light beam and split the second split light beam into at least two first light beams, and the emitting waveguide module is configured to receive the first light beams,

the silicon photonic chip further comprises a second beam splitting module configured to receive the second light beam and split the second light beam into at least two local oscillator light signals, and the photoelectric detection module is connected to the second beam splitting module to receive the local oscillator light signals.

11. The LiDAR according to claim 1, wherein:

the emitting waveguide module extends along a first direction, the first direction being a direction perpendicular to a thickness direction of the silicon photonic chip,

one end of the receiving waveguide module that receives the echo optical signal and one end of the emitting waveguide module that emits the detection optical signal are located at the same end of the silicon photonic chip, and the emitting waveguide module and the receiving waveguide module are arranged opposite each other along a second direction, and any two of the second direction, the first direction, and the thickness direction are perpendicular to each other, and

the emitting waveguide module and the receiving waveguide module are configured to couple an optical signal that is transmitted by the emitting waveguide module into the receiving waveguide module.

12. The LiDAR according to claim 11, wherein a coupling ratio between the emitting waveguide module and the receiving waveguide module is $\alpha$, and the silicon photonic chip satisfies $0.1\% \leq \alpha \leq 1\%$.

13. The LiDAR according to claim 11, wherein:

the emitting waveguide module has a first coupling region, the receiving waveguide module has a second coupling region, and the first coupling region and the second coupling region are arranged opposite each other along the second direction when observed along the thickness direction, and

the second coupling region is bent towards the emitting waveguide module relative to an adjacent part of the receiving waveguide module that is located upstream of the second coupling region in the receiving waveguide module, so that the first coupling region and the second coupling region are configured to couple the optical signal that is transmitted by the emitting waveguide module into the receiving waveguide module.

14. The LiDAR according to claim 13, wherein:

the receiving waveguide module comprises at least two receiving waveguides, each receiving waveguide comprises a first end and a second end that are arranged opposite to each other, the first end configured to receive the echo optical signal, and the receiving waveguides are arranged at intervals along the second direction;

the receiving waveguide adjacent to the emitting waveguide module is a first receiving waveguide, and the first receiving waveguide is provided with the second coupling region;

the receiving waveguide module comprises at least one beam combiner, the beam combiner comprises two input ends and one output end, and the LiDAR satisfies one of the following conditions:

a) the receiving waveguide module comprises at least three receiving waveguides, the at least one beam combiner comprises at least one first beam combiner, each input end of the first beam combiner is connected to a receiving waveguide other than the first receiving waveguide, and the output end of the first beam combiner is connected to a first transmission waveguide;

b) the receiving waveguide module comprises at least four receiving waveguides, the at least one beam combiner comprises a first beam combiner and at least one second beam combiner connected in series, each input end of the first beam combiner is connected to a receiving waveguide other than the first receiving waveguide, the output end of the first beam combiner is connected to a first transmission waveguide, the input end of the second beam combiner is connected to an upstream beam combiner via the first transmission waveguide, the other input end of the second beam combiner is connected to a receiving waveguide other than the first receiving waveguide, and the receiving waveguides connected to adjacent beam combiners are adjacent;

c) the at least one beam combiner comprises a first beam combiner, one input end of the first beam combiner is connected to the first receiving waveguide, the other input end of the first beam combiner is connected to a receiving waveguide adj acent to the first receiving waveguide, and the output end of the first beam combiner is connected to a first transmission waveguide; or

d) the receiving waveguide module comprises at least three receiving waveguides, the at least one beam combiner comprises a first beam combiner and at least one second beam combiner connected in series, one input end of the first beam combiner is connected to the first receiving waveguide, the other input end of the first beam combiner is connected to a receiving waveguide adjacent to the first receiving waveguide, one input end of the second beam combiner is connected to an upstream beam combiner via the first transmission waveguide, the other input end of the second beam combiner is connected to a receiving waveguide, the output end of each beam combiner is connected with a transmission waveguide, the receiving waveguides connected with the input ends of the beam combiners are different, and the receiving waveguides, except for the first receiving waveguide, connected to the adjacent beam combiners are adjacent.

15. The LiDAR according to claim 1, wherein:

the emitting waveguide module extends along a first direction, the first direction being a direction perpendicular to a thickness direction of the silicon photonic chip;
the emitting waveguide module comprises at least two emitting waveguides arranged at intervals along the second direction, and the second direction, the first direction, and the thickness direction are mutually perpendicular to each other, the at least two emitting waveguides comprising:

a first emitting waveguide, the first emitting waveguide comprises an incident end and an emitting end that are arranged opposite to each other, the incident end configured to receive the detection optical signal; and
at least one second emitting waveguide, when observed along the thickness direction, the at least one second emitting waveguide is arranged opposite to the first emitting waveguide along the second direction, and the first emitting waveguide and the at least one second emitting waveguide are configured to couple an optical signal transmitted by the first emitting waveguide into the at least one second emitting waveguide, so that the emitting waveguide module outputs the detection optical signal via the at least two emitting waveguides.

Figure 1

Figure 2

Figure 3

123

second mode
converter ⌐1222

1221

third beam
splitter

third mode
converter ⌐1223

third mode
converter ⌐1223

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

received power/pW

detection distance/m

Figure 23

Figure 24

Figure 25

Figure 26

Figure 27

Figure 28

Figure 29

Figure 30

Figure 31

Figure 32

Figure 33

Figure 34

Figure 35

Figure 36

Figure 37

Europäisches
Patentamt

European
Patent Office

Office européen
des brevets

# EUROPEAN SEARCH REPORT

**Application Number**

EP 24 16 8033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/181310 A1 (LU LIANGJUN [CN] ET AL) 17 June 2021 (2021-06-17) * abstract; figures 8-9, 11-14 * * paragraphs [0016] - [0020], [0024], [0048] - [0051], [0054] - [0056], [0061], [0076], [0080], [0081] * * claims 1-3, 7, 11-14 * | 1-15 | INV. G01S7/481 G01S17/34 |
| A | US 2022/043149 A1 (LACHAPELLE JOSEPH G [US]) 10 February 2022 (2022-02-10) * abstract; figures 9, 13 * * paragraphs [0048], [0049], [0139] - [0141], [0153], [0191] * | 1-15 | |
| A | US 2022/291354 A1 (BEHZADI BEHSAN [US] ET AL) 15 September 2022 (2022-09-15) * abstract; figures 3-6 * * paragraphs [0039] - [0040] * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 28 August 2024 | Cordeiro, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8033

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | | Publication date | Patent family member(s) | | Publication date |
|---|---|---|---|---|---|
| US 2021181310 | A1 | 17-06-2021 | CN | 109991582 A | 09-07-2019 |
| | | | US | 2021181310 A1 | 17-06-2021 |
| | | | WO | 2020181630 A1 | 17-09-2020 |
| US 2022043149 | A1 | 10-02-2022 | CN | 116368400 A | 30-06-2023 |
| | | | CN | 116438466 A | 14-07-2023 |
| | | | EP | 4193176 A1 | 14-06-2023 |
| | | | EP | 4193179 A1 | 14-06-2023 |
| | | | US | 11119219 B1 | 14-09-2021 |
| | | | US | 2022043115 A1 | 10-02-2022 |
| | | | US | 2022043149 A1 | 10-02-2022 |
| | | | US | 2022043202 A1 | 10-02-2022 |
| | | | WO | 2022035537 A1 | 17-02-2022 |
| | | | WO | 2022035549 A1 | 17-02-2022 |
| US 2022291354 | A1 | 15-09-2022 | CN | 113841062 A | 24-12-2021 |
| | | | EP | 3942325 A2 | 26-01-2022 |
| | | | JP | 7419394 B2 | 22-01-2024 |
| | | | JP | 2022527888 A | 07-06-2022 |
| | | | KR | 20210137567 A | 17-11-2021 |
| | | | US | 2020300980 A1 | 24-09-2020 |
| | | | US | 2022291354 A1 | 15-09-2022 |
| | | | WO | 2020236241 A2 | 26-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310370431